# EUROPEAN PATENT SPECIFICATION

(11) **EP 2 684 310 B1**
(45) Date of publication and mention of the grant of the patent: **24.06.2015**
(21) Application number: 11715307.2
(22) Date of filing: 16.03.2011
(51) Int. Cl.: H04L 5/00

(54) **METHODS AND NETWORK NODES FOR ALLOCATING CONTROL CHANNEL ELEMENTS FOR PHYSICAL DOWNLINK CONTROL CHANNEL**
VERFAHRENS UND NETZWERKKNOTEN ZUR ZUWEISUNG VON STEUERUNGSKANALELEMENTEN FÜR EINEN PHYSIKALISCHEN DOWNLINK-STEUERKANAL
MÉTHODES ET NOEUDS DE RÉSEAU POUR ATTRIBUER DES ÉLÉMENTS DE CANAL DE CONTRÔLE POUR LE CANAL DE CONTRÔLE PHYSIQUE EN AVAL

(30) Priority: 08.03.2011 US 201113042969
(43) Date of publication of application: 15.01.2014
(73) Proprietor: Telefonaktiebolaget L M Ericsson (PUBL), 164 83 Stockholm (SE)
(72) Inventor: SANDBERG, David, SE-169 37 Solna (SE); ÖSTERGAARD, Jessica, SE-118 64 Stockholm (SE)
(74) Representative: Ericsson
(86) International application number: PCT/SE2011/050286
(87) International publication number: WO 2012/121636

(56) References cited:
- WO-A1-2010/041993
- WO-A1-2010/053145

## Description

### TECHNICAL FIELD

The present disclosure pertains to telecommunications, and more particularly to methods and apparatuses for controlling communications through a control channel.

### BACKGROUND

In a typical cellular radio system, wireless terminals (also known as mobile stations and/or user equipment units (UEs)) communicate via a radio access network (RAN) to one or more core networks. User equipment units (UEs) may be, for example, mobile telephones ("cellular" telephones), desktop computers, laptop computers, and tablet computers with wireless communication capability to communicate voice and/or data with a radio access network.

The radio access network covers a geographical area which is divided into cell areas, with each cell area being served by a base station, e.g., a radio base station (RBS), which in some networks is also called "NodeB" or (in Long Term Evolution) eNodeB. A cell is a geographical area where radio coverage is provided by the radio base station equipment at a base station site. Each cell is identified by an identity within the local radio area, which is broadcast in the cell. The base stations communicate over the air interface operating on radio frequencies with the UEs within range of the base stations.

Specifications for an Evolved Universal Terrestrial Radio Access Network (E-UTRAN) are ongoing within the 3rd Generation Partnership Project (3GPP). Another name used for E-UTRAN is the Long Term Evolution (LTE) Radio Access Network (RAN). Long Term Evolution (LTE) is a variant of a 3GPP radio access technology wherein the radio base station nodes are connected directly to a core network rather than to radio network controller (RNC) nodes. In general, in LTE the functions of a radio network controller node are performed by the radio base stations nodes. As such, the radio access network of an LTE system has an essentially "flat" architecture comprising radio base station nodes without reporting to radio network controller nodes.

The evolved UTRAN comprises evolved base station nodes, e.g., evolved NodeBs or eNBs, providing user-plane and control-plane protocol terminations toward the UEs. The eNB hosts the PHYsical (PHY), Medium Access Control (MAC), Radio Link Control (RLC), and Packet Data Control Protocol (PDCP) layers that include the functionality of user-plane header-compression and encryption. The eNodeB also offers Radio Resource Control (RRC) functionality corresponding to the control plane. The eNodeB performs many functions including radio resource management, admission control, scheduling, enforcement of negotiated UL QoS, cell information broadcast, ciphering/deciphering of user and control plane data, and compression/decompression of DL/UL user plane packet headers.

The LTE standard is based on multi-carrier based radio access schemes, Orthogonal Frequency-Division Multiplexing (OFDM) in the downlink and SC-FDMA in the uplink. Orthogonal FDM's (OFDM) spread spectrum technique distributes the data over a large number of carriers that are spaced apart at precise frequencies. This spacing provides the "orthogonality" in this technique which prevents the demodulators from seeing frequencies other than their own. The benefits of OFDM are high spectral efficiency, resiliency to RF interference, and lower multi-path distortion.

In the time domain, one subframe, Transmission Time Interval (TTI), of 1 ms duration is divided into 12 or 14 OFDM (or SC-FDMA) symbols, depending on the configuration. One OFDM (or SC- FDMA) symbol includes a number of sub-carriers in the frequency domain, depending on the channel bandwidth and configuration. One OFDM (or SC-FDMA) symbol on one sub-carrier is referred to as a resource element (RE). See, e.g., 3GPP Technical Specification 36.211.

In LTE no dedicated data channels are used; instead, shared channel resources are used in both downlink and uplink. These shared resources, the Physical Downlink Shared Channel (PDSCH) and the Physical Uplink Shared Channel (PUSCH), are each controlled by one or more schedulers that assign(s) different parts of the downlink and uplink shared channels to different UEs for reception and transmission, respectively.

The downlink assignments for the Physical Downlink Shared Channel (PDSCH) and uplink grants for the Physical Uplink Shared Channel (PUSCH) are transmitted to UEs in a control region covering a few OFDM symbols in the beginning of each downlink subframe. The Physical Downlink Shared Channel (PDSCH) is transmitted in a data region covering all or a subset of the OFDM symbols in each downlink subframe. The size of the control region may be either, one, two, three or four OFDM symbols, and is set dynamically per subframe, sometimes within semistatically configured restrictions (e.g., R-PDCCH, cross-scheduled UEs in carrier aggregation).

Each assignment PDSCH or PUSCH is transmitted as a message on a physical channel named the Physical Downlink Control Channel (PDCCH) in the control region. There are typically multiple Physical Downlink Control Channels (PDCCHs) in each subframe. Downlink assignments and uplink grants are defined for only one transmission time interval (TTI). Thus, a new downlink assignment or uplink grant is sent for each TTI where the UE is expected to receive transmission, except for semipersistent scheduling where scheduling is performed for a defined number of TTIs by identifying that a downlink assignment or uplink grant is valid for a one TTI at a time, reoccurring with a configured periodicity until it is released by a defined PDCCH message or by RRC signalling.

A PDCCH is mapped to (e.g., comprises) a number of control channel elements (CCEs). Each CCE consists of thirty six Resource Elements (REs). A PDCCH can be transmitted with quadrature phase-sift keying (QPSK) modulation and channel coding, and can include an aggregation level of 1, 2, 4 or 8 CCEs, See, e.g., 3GPP Technical Specification 36.213, which is incorporated herein by reference in its entirety. These four different alternatives are herein referred to as aggregation level 1, 2, 4, and 8, respectively. Each control channel element (CCE) may only be utilized on one aggregation level at the time. The total number of available control channel element (CCEs) in a subframe will vary depending on several parameters like number of OFDM symbols used for PDCCH, number of antennas used for transmission/reception, system bandwidth, Physical HARQ Indicator Channel (PHICH) size, etc.

The number of CCEs, and thereby the coderate, used for transmission of a PDCCH message from a network node to a UE can be controlled based on channel state information (CSI) that is reported by the UE. The CSI can include a Channel-Quality Indication (CQI), a rank indication, and a precoder matrix indication. A UE generates the CSI based on measurements performed on CSI reference signals (RS) transmitted by the network node. The interference measured on these references signals, from RSs or data traffic, might be correlated with the interference experienced by a PDCCH. Moreover, data traffic and its resulting interference dynamically changes over time, and these changes may not be correlated with PDCCH interference changes.

Consequently, controlling CCE allocation for PDCCH messages solely based on CSI may lead to inefficient allocation of CCEs. Inefficient allocation of CCEs may be particularly problematic when handling low-bandwidth services and/or uplink communications (which are typically limited to more narrowband allocation than downlink due to UE transmission power limitations) where a lack of available CCEs can limit how many UEs can be scheduled in the same TTI on different frequency segments to utilize the available bandwidth. Improvements in how CCEs can be allocated for PDCCH messages are therefore desired in order to improve existing wireless systems as e.g. disclosed in WO2010/053145.

### SUMMARY

Some embodiments of the present invention are a method of operating a node of a telecommunications system. The method controls how many Control Channel Elements (CCEs) of a frequency or time division multiplexing radio interface are used to transmit a Physical Downlink Control Channel (PDCCH) message to a User Equipment unit (UE) based on a rate of expected responses that the node does not receive from the UE for previously transmitted PDCCH messages to the UE.

In some further embodiments, the method of controlling how many CCEs are used to transmit the PDCCH message to the UE may include comparing the rate of expected responses that the node does not receive to a threshold value to determine when to increase the number of CCEs that are used to communicate the PDCCH message, and controlling the threshold value of the comparison based on uplink channel quality from the UE to the node so that as uplink channel quality decreases a higher rate of expected responses that the node does not receive is needed to trigger an increase in the number of CCEs.

In some further embodiments, the method of controlling how many CCEs are used to transmit the PDCCH message to the UE can include communicating a PDCCH message containing a DownLink (DL) assignment to the UE. In response to receipt of an ACKnowledgement (ACK) or Negative-ACKnowledgement (NACK) from the UE, how many CCEs are used to communicate a PDCCH message to the UE can be decreased. Conversely, in response to absence of receipt of the ACK or NACK from the UE, how many CCEs are used to communicate a PDCCH message to the UE can be increased.

In some further embodiments, the method of controlling how many CCEs are used to transmit the PDCCH message to the UE can include communicating a PDCCH message containing an UpLink (UL) grant PDCCH message to the UE. In response to receipt of an UL transmission on a Physical Uplink Shared Channel (PUSCH) from the UE, how many CCEs are used to communicate a PDCCH message to the UE can be decreased. Conversely, in response to absence of receipt of an UL transmission on the PUSCH from the UE, how many CCEs are used to communicate a PDCCH message to the UE can be increased.

Some other embodiments of the present invention are directed to a corresponding node of a telecommunications system.

Other methods, network nodes, and/or telecommunication systems according to embodiments of the invention will be or become apparent to one with skill in the art upon review of the following drawings and detailed description. It is intended that all such additional methods, network nodes, and/or telecommunication systems be included within this description, be within the scope of the present invention, and be protected by the accompanying claims. Moreover, it is intended that all embodiments disclosed herein can be implemented separately or combined in any way and/or combination.

### BRIEF DESCRIPTION OF THE DRAWINGS

The accompanying drawings, which are included to provide a further understanding of the invention and are incorporated in and constitute a part of this application, illustrate certain embodiment(s) of the invention. In the drawings:
Figure 1 is a schematic view of portions of a radio access network according to some embodiments;
Figure 2 is a diagrammatic view of a representative subframe of an OFDM radio interface;
Figure 3 is a diagrammatic view of a representative subframe where the number of CCEs allocated for Physical Downlink Control Channel (PDCCH) messages is controlled based on downlink assignment responses and uplink transmission from UEs;
Figures 4a-b illustrate example operations and methods by a network node to control CCE allocation based on a rate of expected responses that the network node does not receive from a UE for previously transmitted PDCCH messages to the UE;
Figures 5-6 illustrate example operations and methods by a network node to control CCE allocation in response to transmission of a downlink assignment message to a UE and whether a corresponding response is received from the UE;
Figures 7-9 illustrate example operations and methods by a network node to control CCE allocation for transmission of a PDCCH message in response to transmission of an uplink grant message to a UE and whether a corresponding response is received from the UE;
Figures 10-12 illustrate example operations and methods by a network node to control CCE allocation for transmission of a PDCCH message in response to transmission of both a downlink assignment message and an uplink grant message to a UE and whether a corresponding responses are received from the UE;
Figure 13 is a graph of an example probability of a network node detecting a false UE response as a function of a signal-to-noise ratio of the channel.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

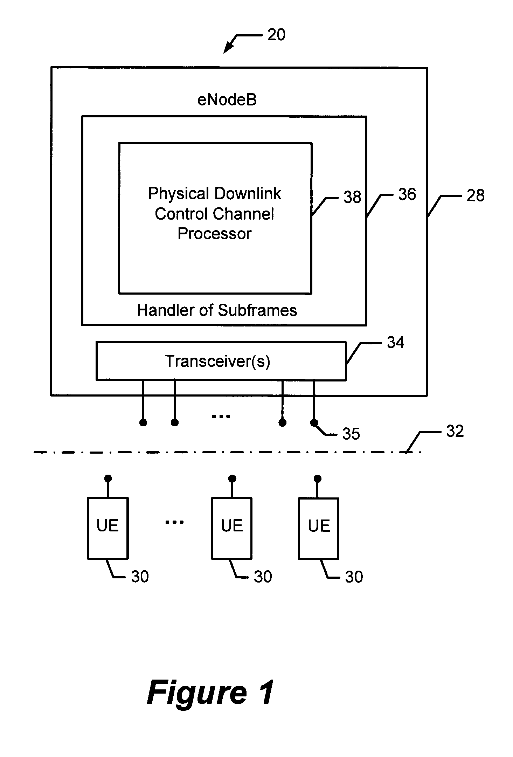

Figure 1 shows portions of a radio access network (RAN) of a telecommunications system 20 that includes a network node in the form of a radio base station 28 or "eNodeB" which communicates with plural User Equipment units (UEs) 30 over a radio air interface 32. It will be appreciated that the RAN typically comprises numerous other network nodes, such as other radio base station nodes. Only one node is shown in Figure 1 for sake of simplicity, and only selected elements or functional units are shown which are germane to the technology disclosed herein.

The eNodeB 28 includes one or more transceiver(s) 34 which is/are configured to transmit a subframe of information over the radio interface 32. For downlink transmission to the UEs 30, the transceiver(s) 34 feed one or more antennae 35 which function to provide plural sub-carriers. The transceiver(s) 34 thereby transmit symbols of the subframe on plural sub-carriers in a frequency domain.

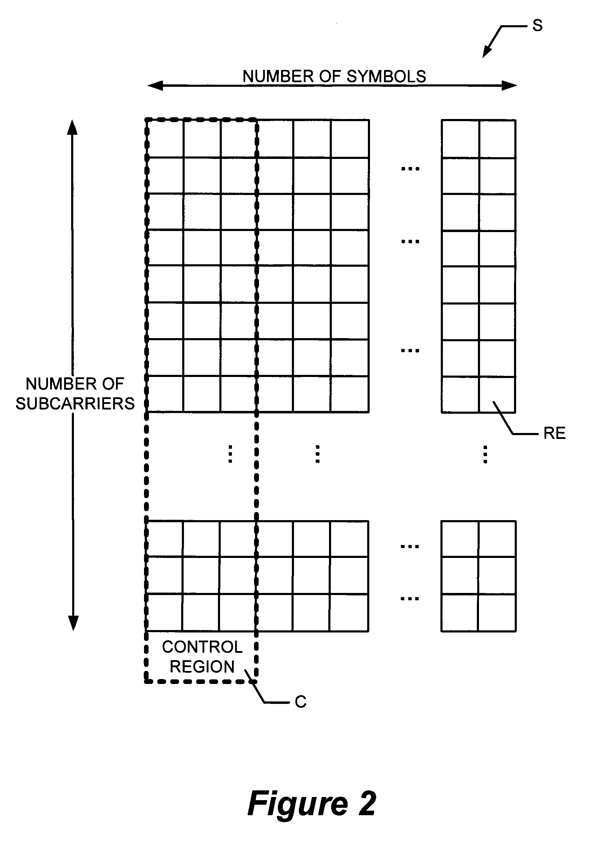

The eNodeB 28 also includes a handler 36 of subframes that is configured to prepare or format subframes of information for transmission by transceiver(s) 34 on a downlink to one or more of the UEs 30. A representative, sample depiction of a subframe S is shown in Figure 2. The subframe S is illustrated in the form of a downlink resource grid of resource elements (REs). Each column of the two dimensional grid of Figure 2 represents a symbol (e.g., an OFDM symbol); each row of the grid of Figure 2 represents a subcarrier. A resource element (RE) is the smallest time-frequency unit for downlink transmission in the sub frame S. That is, one symbol on one sub-carrier in the sub-frame includes several resource elements (REs). As also mentioned above, a control channel element (CCE) includes a predetermined number of resource elements (REs). For example, typically a CCE has thirty six REs.

Details of the subframe S and the resource grid are provided in 3GPP Technical Specification 36.211, which is incorporated herein by reference. The subframe S includes downlink physical channels, each of which corresponds to a set of resource elements which carry information originating from layer one or higher layers. The downlink physical channels of subframe S can include the Physical Downlink Control Channel (PDCCH), the Physical Downlink Share Channel (PDSCH), the Physical Broadcast Channel (PBCH), the Physical Multicast Channel (PMCH), the Physical Control Format Indicator channel (PCFICH), the Physical Hybrid ARQ Indicator Channel (PHICH), a reference signal (RS), and a synchronization signal.

As explained above, each subframe S includes a control region. Depending on implementation, the size of the control region can be either one, two, three, or four OFDM symbols. The example subframe S of Figure 2 includes a control region C having three OFDM symbols (e.g., three columns of the grid of subframe S are shown as forming the control region C), the other OFDM symbols correspond to the data region to which a PDSCH is allocated. The number of OFDM symbols included in the control region C can be any number allowed by the communication protocol between the eNodeB 28 and the UEs 30. The control region C of subframe S includes the aforementioned Physical Downlink Control Channel (PDCCH), the aforementioned Physical Hybrid ARQ Indicator Channel (PHICH), and the aforementioned Physical Control Format Indicator channel (PCFICH), as well as reference signals (RS).

The subframe handler 36 of the eNodeB 28 formats and processes information for transmission through a subframe S, such as that depicted in Figure 2. The subframe handler 36 in turn includes a PDCCH processor 38. The PDCCH processor 38 can include one or more data processing circuits, such as a general purpose and/or special purpose processor (e.g., microprocessor and/or digital signal processor) with on-board and/or separate memory devices. The PDCCH processor 38 is configured to execute computer program instructions, residing in memory device(s) described below as a computer readable medium, to carry out at least some of the operations disclosed herein for the PDCCH processor 38.

As explained above, the PDCCH messages carry downlink assignments for the Physical Downlink Shared Channel (PDSCH) and uplink grants for the Physical Uplink Shared Channel (PUSCH). There are typically multiple PDCCHs in the control region of each subframe, and the UEs 30 detect the assignments/grants directed to them through the PDCCHs.

The number of CCEs that are needed to be able to reliably transmit a single PDCCH message from the eNodeB 28 to a particular UE 30 depends on the present channel quality from the eNodeB 28 to the UE 30. Accordingly, PDCCH messages may be more reliably and efficiently transmitted by providing a mechanism for the eNobeB 28 to determine how many CCEs to select for use in transmitting each PDCCH to the UE 30 based on the present quality of the channel through which the PDCCH is transmitted.

In accordance with various embodiments of the present invention, the PDCCH processor 38 controls how many CCEs of a frequency or time division multiplexing radio interface are used to transmit a PDCCH message to a UE 30 based on a rate of expected responses that the eNodeB 28 does not receive from the UE 30 for previously transmitted PDCCH messages to the UE 30.

The PDCCH processor 38 may control how many CCEs are used to transmit the PDCCH message to the UE 30 by comparing the rate of expected responses that the eNodeB 28 does not receive to a threshold value to determine when to increase the number of CCEs that are used to communicate the PDCCH message. The PDCCH processor 38 may control the threshold value of the comparison based on uplink channel quality from the UE 30 to the eNodeB 28 so that as uplink channel quality decreases a higher rate of expected responses that the node does not receive is needed to trigger an increase in the number of CCEs.

Although various embodiments are described herein the context of the CCEs of a frequency division multiplexed radio interface, in some other embodiments the CCEs may alternatively or additionally relate to resource elements of a time division multiplexed radio interface. The receipt or absence of a response from a particular UE 30 to a PDCCH message can provide a more accurate indication of the present channel conditions affecting communication of a message through the PDCCH to a particular UE 30. Accordingly, more efficient allocation of CCEs to PDCCH transmissions to a particular UE 30 may be accomplished compared to using channel state information (CSI) alone.

Example operations that may be carried out by the PDCCH processor 38 to control the number of CCEs that are used to transmit a PDCCH to a particular UE 30 are explained below with regard to the following three embodiments:
1) whether the eNodeB 28 receives from the UE 30 an ACK/NACK response to a DownLink (DL) assignment message that the eNodeB 28 transmitted to the UE 30;
2) whether the eNodeB 28 receives from the UE 30 an uplink (UL) transmission responsive to an uplink (UL) grant message that the eNodeB 28 transmitted to the UE 30; and
3) whether the eNodeB 28 receives from the UE 30 both an ACK/NACK response and an UL transmission responsive to a corresponding DL assignment message and UL grant message that the eNodeB 28 transmitted to the UE 30.

Although operation of the PDCCH processor 38 is described in the context of these three separate embodiments, the invention is not limited thereto. Moreover, the three example embodiments are described in the context of using a step (jump) algorithm to adjust a PDCCH link adaptation offset value, however the adjustments may instead be made by other algorithms, such as by a moving average filter and/or an exponential filter.

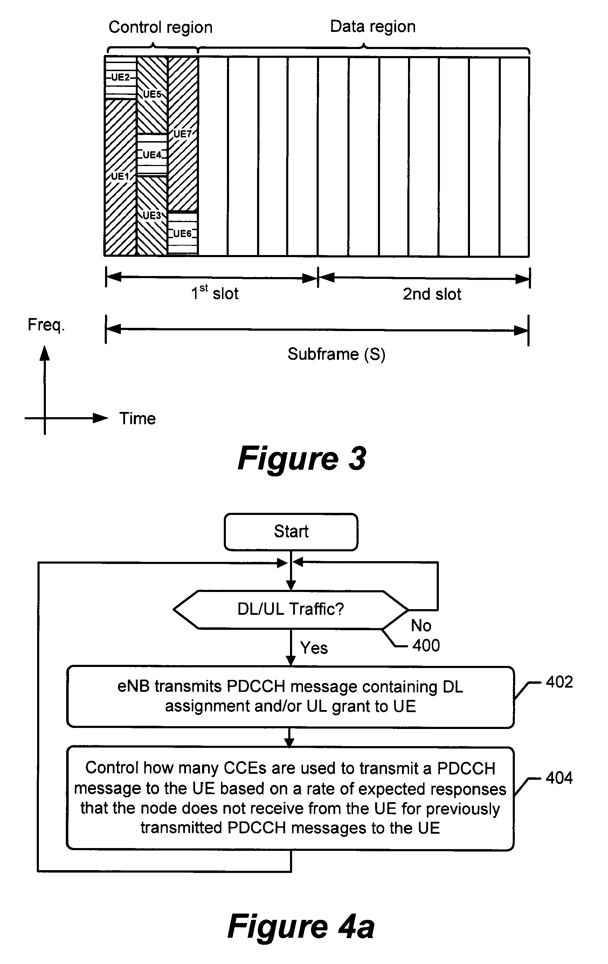

Before discussing these three embodiments, reference is made to Figure 3, which illustrates that the PDCCH processor 38 can separately control how many CCEs are used to transmit a PDCCH message to each of a plurality of different UEs (i.e., UE1-UE7) based on whether the eNodeB 28 received from the respective one of the UEs (i.e., UE1-UE7) a response to a number of prior PDCCH messages transmitted to the respective UE. As explained above, a PDCCH may, for example, include an aggregation level of 1, 2, 4 or 8 CCEs. The CCE aggregation level is the number of CCEs used for PDCCH transmission from the eNodeB 28 to a UE 30, and which are decoded by the UE. In the example of Figure 3, the PDCCH processor 38 has allocated a CCE aggregation level of 1 to the second, fourth, and sixth user equipment units UE 2, UE 4, and UE 6. In contrast, the PDCCH processor 38 has allocated a CCE aggregation level of 2 to the third and fifth user equipment units UE 3 and UE 5, and has allocated a CCE aggregation level of 4 to the first and seventh user equipment units UE 1 and UE 7. As will be explained below, a lower aggregation level (e.g., 1) may be provided for PDCCH transmissions to UEs under some conditions (e.g., higher quality PDCCH condition, lower number of message bits to be transmitted, etc.), and a higher aggregation level (e.g., 3) may be provided for PDCCH transmissions to UEs under some other conditions (e.g., lower quality PDCCH condition, greater number of message bits to be transmitted, etc.).

Regarding Figure 3, it is noted, for example, that 1 CCE may contain 9 resource element groups (REGs), and each REG may contain 4 resource elements (REs). The REs in a REG are consecutive, however the REGs of a CCE may be consecutive or may be spread out to, for example, provide time and frequency diversity.

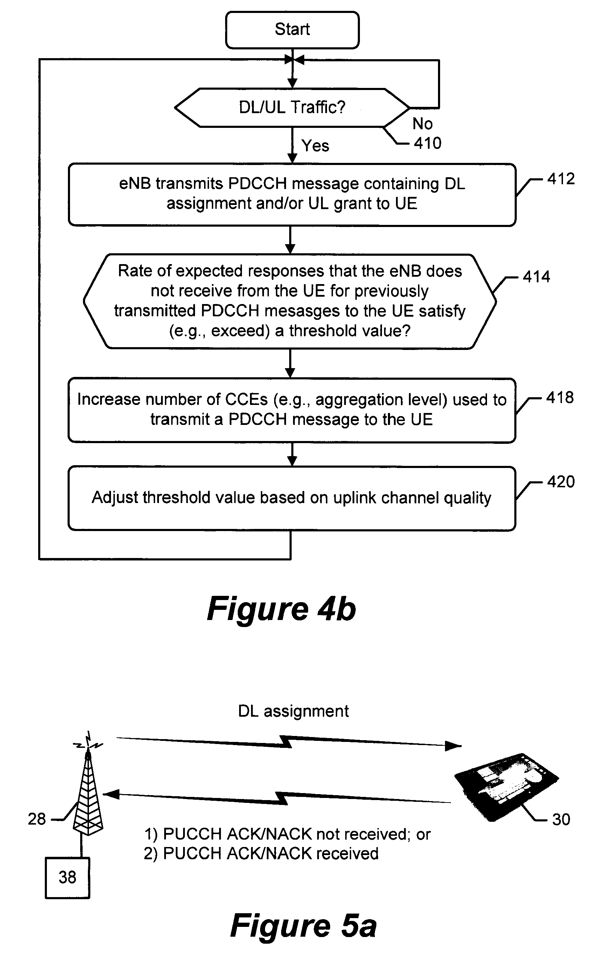

Figures 4a and 4b illustrate example operations and methods of the PDCCH processor 38 within the eNodeB 28 or another network node for controlling allocation of CCEs of a frequency or time division multiplexing radio interface for transmission of a PDCCH message based on a rate of expected responses that the eNodeB 28 does not receive from the UE 30 for (in response to) previously transmitted PDCCH messages to the UE 30.

Referring to Figure 4a, while the eNodeB 28 has downlink (DL) traffic that is buffered awaiting transmission to the UE 30 and/or while the UE 30 has uplink (UL) traffic that is buffered awaiting transmission to the eNodeB 28 (determined at block 400), the eNodeB 28 transmits (block 402) PDCCH messages containing DL assignments or UL grants to the UE 30. The PDCCH processor 38 controls (block 404) how many CCEs are used to transmit a PDCCH message to the UE 30 based on a rate of expected responses that the eNodeB 28 does not receive from the UE 30 for previously transmitted PDCCH messages to the UE 30.

Figure 4b illustrates further operations that may be carried out by the PDCCH processor 38 to control CCE allocation for a PDCCH message. Referring to Figure 4b, while the eNodeB 28 has downlink (DL) traffic that is buffered awaiting transmission to the UE 30 and/or while the UE 30 has uplink (UL) traffic that is buffered awaiting transmission to the eNodeB 28 (determined at block 410), the eNodeB 28 transmits (block 412) PDCCH messages containing DL assignments or UL grants to the UE 30. The PDCCH processor 38 determines (block 414) a rate of expected responses that the eNodeB 28 does not receive from the UE 30 for previously transmitted PDCCH messages to the UE 30 to a threshold value. When the rate satisfies the comparison (e.g., exceeds the threshold value), the number or CCEs (e.g., the aggregation level of the CCEs) that are used to transmit a PDCCH message to the UE 30 is increased (block 416). The threshold value may be adjusted (block 418) based on uplink channel quality from the UE 30 to the eNodeB 28 so that as uplink channel quality decreases a higher rate of expected responses that the eNodeB 28 does not receive is needed to trigger an increase in the number of CCEs.

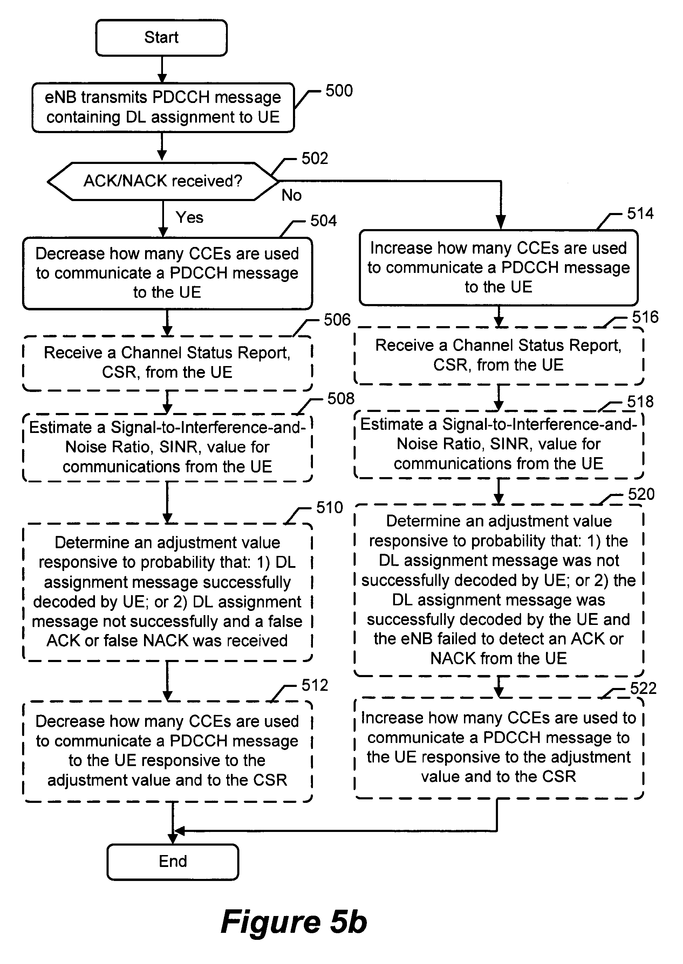

As will be explained in further detail below with regard to, for example, Figure 5b, the allocation of CCEs responsive to the "rate of expected responses" can be calculated on a "per-response" basis, such that the PDCCH processor 38 can respond to one or several responses/lack of responses.

When the PDCCH processor 38 allocates more CCEs for use in transmitting a PDCCH message due to allowed aggregation levels but which is much greater than the number of CCEs determined by the CCE allocation algorithm, the PDCCH processor 38 may respond to another occurrence of absence of receipt of an expected response by causing a larger adjustment in allocation of CCEs to adapt to the effects of channel quality. For example, when the CCE allocation algorithm determined that 4.2 CCEs were to be used for the PDCCH message but, due to allowed aggregation levels being limited to 1, 2, 4, or 8, 8 CCEs were used, the PDCCH processor 38 may respond to another occurrence of absence of receipt of an expected response by causing a larger adjustment in allocation of CCEs to adapt to the effects of channel quality. In contrast, in the above example, if the PDCCH processor 38 allocated 4 CCEs (less aggressive channel adaptation) for a PDCCH message in expectation that 4 CCEs would be just enough, not receiving a response is not as unexpected as in the previous example and, therefore, a relatively smaller adjustment may be made in the allocation of CCEs to adapt to the effects of channel quality.

Accordingly, although some of Figures 5b, 6, 8, 9, 11, and 12a-b illustrate a single PDCCH message transmission and adjustment of allocated CCEs, it is to be understood that these figures can correspond to a single pass through the example operation loops shown in Figure 4a and/or Figure 4b.

### Adaptation of CCE Allocation Responsive to DL Assignments:

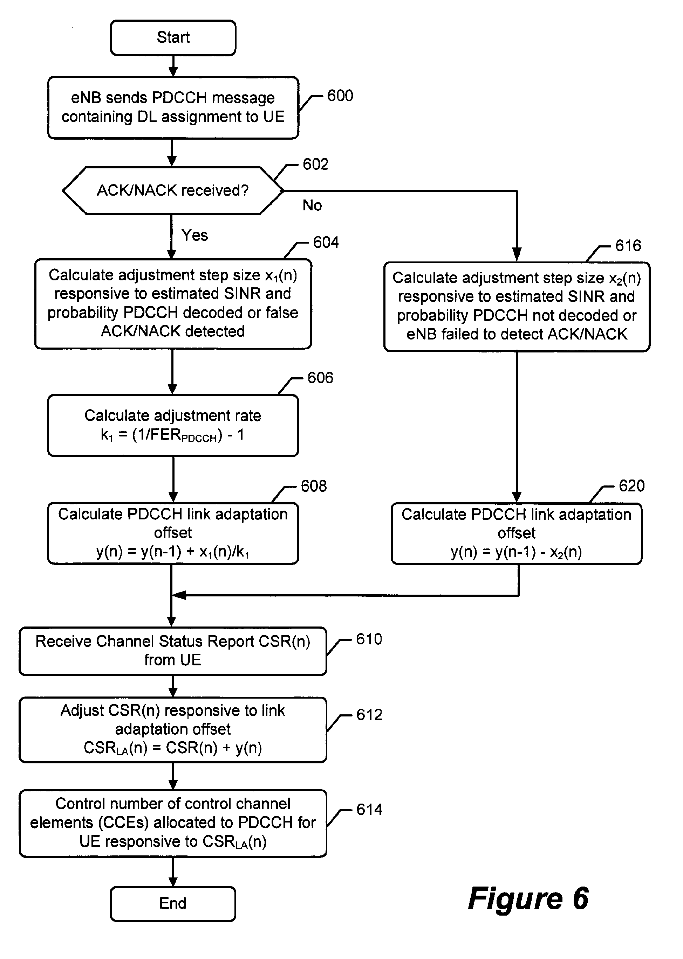

Figures 5a-b and 6 illustrate example operations and methods of the PDCCH processor 38 within the eNodeB 28 or another network node for controlling CCE allocation for transmission of a PDCCH message based on estimation of PDCCH quality using a downlink DL assignment message.

Referring to Figures 5a and 5b, the PDCCH processor 38 transmits (block 500) a PDCCH message containing a DL assignment to a UE 30. The PDCCH processor 38 determines (block 502) whether it received an ACKnowledgement, ACK, or Negative-ACKnowledgement, NACK, from the UE 30. The PDCCH processor 38 can respond to receipt of the ACK or NACK from the UE 30 by decreasing (block 504) how many CCEs are used to communicate a PDCCH message to the UE 30. In contrast, the PDCCH processor 38 can respond to absence of receipt of the ACK or NACK from the UE 30 by increasing (block 514) how many CCEs are used to communicate a PDCCH message to the UE 30.

In some further embodiments, the PDCCH processor 38 may decrease (block 504) the number of CCEs using the optional operations and methods of blocks 506-512. The eNodeB 28 receives (block 506) a Channel Status Report (CSR) from the UE 30. The PDCCH processor 38 estimates (block 508) a Signal-to-Interference-and-Noise Ratio (SINR) value for communications from the UE 30. The SINR value may be estimated based on a previously received Channel Status Report from the UE 30, that can include a rank indication that provides information about the channel rank, a precoding matrix indicator, and/or a channel-quality indication (CQI) representing a recommended modulation scheme, coding rate and precoder matrix for downlink transmission on PDSCH. The PDCCH processor 38 determines (block 510) an adjustment value responsive to probability that: 1) the DL assignment message was successfully decoded by the UE 30; or 2) the DL assignment message not successfully by the UE 30 and a false ACK or false NACK was received by the eNodeB 28. The PDCCH processor 38 then decreases (block 512) how many CCEs are used to communicate a PDCCH message to the UE 30 responsive to the adjustment value and to the CSR.

The PDCCH processor 38 may increase (block 514) the number of CCEs using the optional operations and methods of blocks 516-522. The eNodeB 28 receives (block 516) a Channel Status Report (CSR) from the UE 30. The PDCCH processor 38 estimates (block 518) a Signal-to-Interference-and-Noise Ratio (SINR) value for communications from the UE 30. The PDCCH processor 38 determines (block 520) an adjustment value responsive to probability that: 1) the DL assignment message was not successfully decoded by the UE 30; or 2) the DL assignment message successfully decoded by the UE 30 and the eNodeB 28 failed to detect an ACK or NACK from the UE 30. The PDCCH processor 38 then increases (block 522) how many CCEs are used to communicate a PDCCH message to the UE 30 responsive to the adjustment value and to the CSR.

Figure 6 illustrates further operations and methods that may be carried out by the PDCCH processor 38 to control CCE allocation for transmission of a PDCCH message according to some embodiments. Referring to Figure 6, the PDCCH processor 38 transmits (block 600) a PDCCH message containing a DL assignment to a UE 30. The PDCCH processor 38 determines (block 602) whether it received a corresponding ACK or NACK from the UE 30.

When an ACK or NACK is received, an adjustment step size x₁(n) is calculated (block 604) responsive to an estimated SINR and a probability determination that corresponds to the operations of block 510 of Figure 5. An adjustment rate k₁ is calculated (606) as follows: k₁ = (1/FER_{PDCCH}) - 1, where FER_{PDCCH} is a target frame error rate for the PDCCH. A PDCCH link adaptation offset y(n) is calculated (block 608) as follows: y(n)=y(n-1)+x₁(n)/k₁.

In contrast, when an ACK or NACK is not received, an adjustment step size x₂(n) is calculated (block 616) responsive to an estimated SINR and a probability determination that corresponds to the operations of block 520 of Figure 5. A PDCCH link adaptation offset y(n) is calculated (block 620) as follows: y(n)=y(n-1)-x₂(n).

A Channel Status Report (CSR) is received (block 610) from the UE 30. The CSR is adjusted to generate (block 612) a PDCCH-adapted-CSR_{LA} value as follows: CSR_{LA}(n)=CSR(n)+y(n). The CSR reported by a UE may be preprocessed before being adjusted to generate the CSR_{LA}. The PDCCH processor 38 then controls (block 614) how many CCEs are used to communicate a PDCCH message to the UE 30 responsive to the CSR_{LA} value.

Accordingly, a first increase can be provided in the number of CCEs based on a defined rate of expected responses not being received from the UE while uplink channel quality from the UE is at a first level. A second increase can be provided in the number of CCEs based on the defined rate of expected responses not being received from the UE while uplink channel quality from the UE is at a second level. When the first level of uplink channel quality is better than the second level of uplink channel quality, then the first increase in the number of CCEs can be greater than the second increase in the number of CCEs.

### Adaptation of CCE Allocation Responsive to UL Grants:

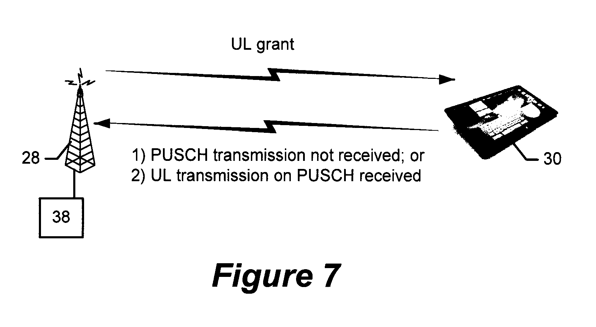

Figures 7-9 illustrate example operations and methods of the PDCCH processor 38 within the eNodeB 28 or another network node for controlling CCE allocation for transmission of a PDCCH message based on estimation of PDCCH quality using an UpLink (UL) grant message.

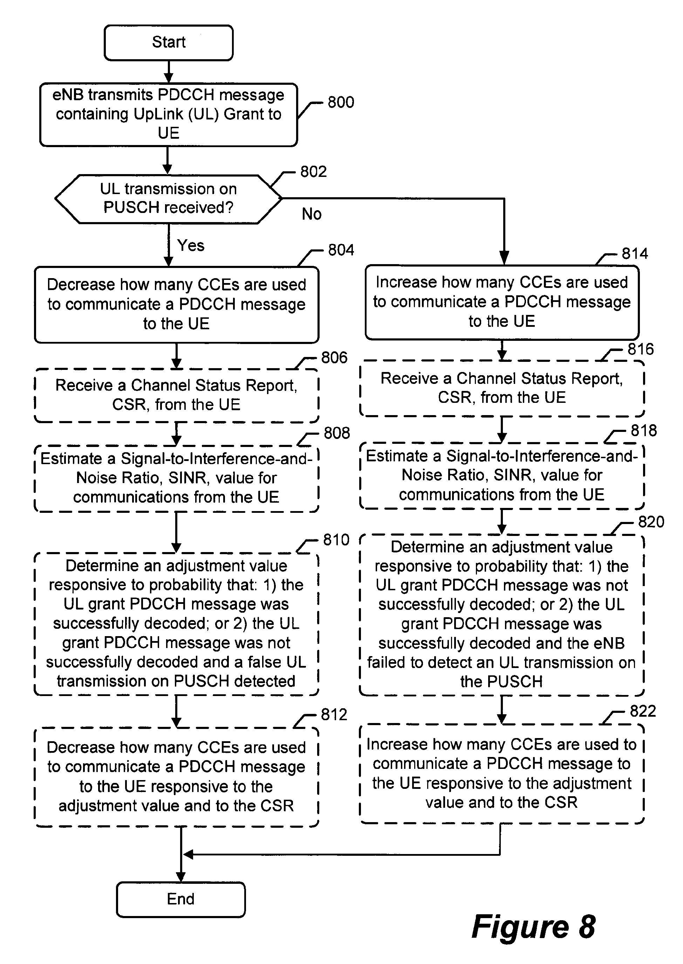

Referring to Figures 7 and 8, the PDCCH processor 38 transmits (block 800) a PDCCH message containing a DL assignment to a UE 30. The PDCCH processor 38 determines (block 802) whether it received an UL transmission on the PUSCH from the UE 30. The PDCCH processor 38 can respond to receipt of the UL transmission from the UE 30 by decreasing (block 804) how many CCEs are used to communicate a PDCCH message to the UE 30. In contrast, the PDCCH processor 38 can respond to absence of receipt of an UL transmission from the UE 30 by increasing (block 814) how many CCEs are used to communicate a PDCCH message to the UE 30.

In some further embodiments, the PDCCH processor 38 may decrease (block 804) the number of CCEs using the optional operations and methods of blocks 806-812. The eNodeB 28 receives (block 806) a Channel Status Report (CSR) from the UE 30. The PDCCH processor 38 estimates (block 808) a SINR value for communications from the UE 30. The PDCCH processor 38 determines (block 810) an adjustment value responsive to probability that: 1) the UL grant PDCCH message was successfully decoded by the UE 30; or 2) the UL grant PDCCH message was not successfully decoded by the UE 30 and a false UL transmission on the PUSCH was detected by the eNodeB 28 while subject to the estimated SINR value. The PDCCH processor 38 then decreases (block 812) how many CCEs are used to communicate a PDCCH message to the UE 30 responsive to the adjustment value and to the CSR.

The PDCCH processor 38 may increase (block 814) the number of CCEs using the optional operations and methods of blocks 816-822. The eNodeB 28 receives (block 816) a Channel Status Report (CSR) from the UE 30. The PDCCH processor 38 estimates (block 818) a Signal-to-Interference-and-Noise Ratio (SINR) value for communications from the UE 30. The PDCCH processor 38 determines (block 820) an adjustment value responsive to probability that: 1) the UL grant PDCCH message was not successfully decoded by the UE 30; or 2) the UL grant PDCCH message was successfully decoded by the UE 30 and the eNodeB 28 failed to detect an UL transmission on the PUSCH from the UE 30 while subject to the estimated SINR value. The PDCCH processor 38 then increases (block 822) how many CCEs are used to communicate a PDCCH message to the UE 30 responsive to the adjustment value and to the CSR.

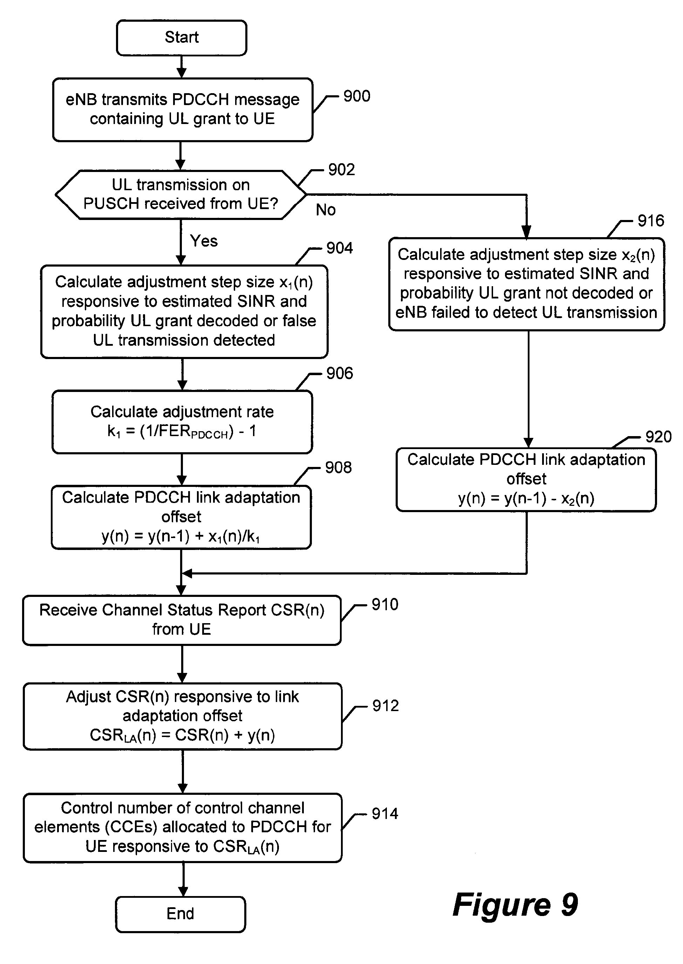

Figure 9 illustrates further operations and methods that may be carried-out by the PDCCH processor 38 to control CCE allocation for transmission of a PDCCH message according to some embodiments. Referring to Figure 9, the PDCCH processor 38 transmits (block 900) a PDCCH message containing an UL grant to a UE 30. The PDCCH processor 38 determines (block 902) whether it received a corresponding UL transmission on a PUSCH from the UE 30.

When an UL transmission is received, an adjustment step size x₁(n) is calculated (block 904) responsive to an estimated SINR and a probability determination that corresponds to the operations of block 810 of Figure 8. An adjustment rate k₁ is calculated (906) as follows: k₁ = (1/FER_{PDCCH}) - 1, where FER_{PDCCH} is a target frame error rate for the PDCCH. A PDCCH link adaptation offset is calculated (block 908) as follows: y(n)=y(n-1)+x₁(n)/k₁.

In contrast, when an UL transmission is not received, an adjustment step size x₂(n) is calculated (block 916) responsive to an estimated SINR and a probability determination that corresponds to the operations of block 820 of Figure 8. A PDCCH link adaptation offset is calculated (block 920) as follows: y(n)=y(n-1)-x₂(n).

A Channel Status Report (CSR) is received (block 910) from the UE 30. The CSR is adjusted to generate (block 912) a PDCCH-adapted-CSR_{LA} value as follows: CSR_{LA}(n)=CSR(n)+y(n). The PDCCH processor 38 then controls (block 914) how many CCEs are used to communicate a PDCCH message to the UE 30 responsive to the CSR_{LA} value.

### Adaptation of CCE Allocation Responsive to DL Assignments and UL Grants:

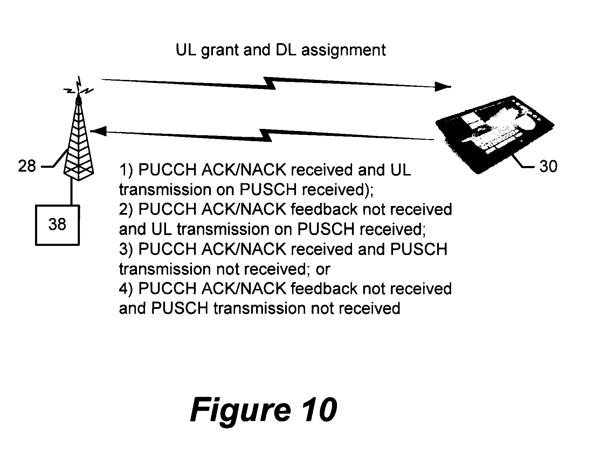

Figures 10-12 illustrate example operations and methods of the PDCCH processor 38 within the eNodeB 28 or another network node for controlling CCE allocation for transmission of a PDCCH message based on estimation of PDCCH quality using both a DownLink (DL) assignment message and an UpLink (UL) grant message.

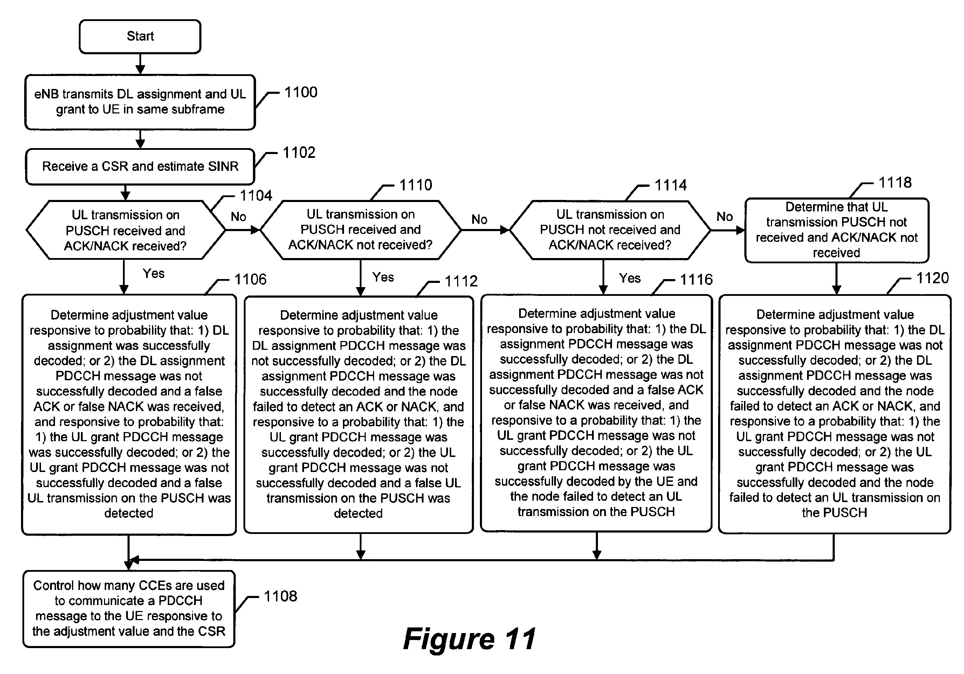

Referring to Figures 10 and 11, the PDCCH processor 38 transmits (block 1100) within a same subframe a DL assignment PDCCH message and an UL grant PDCCH message to the UE 30. A Channel Status Report (CSR) is received (1102) from the UE 30 and a SINR value is estimated for communications from the UE 30.

The PDCCH processor 38 determines (block 1104) whether it received a UL transmission (corresponding to the UL grant) on the PUSCH from the UE 30 and received a ACK/NACK (corresponding to the DL assignment) from the UE 30. In response to receiving both, the PDCCH processor 38 determines (block 1106) an adjustment value responsive to a probability that: 1) the DL assignment PDCCH message was successfully decoded by the UE; or 2) the DL assignment PDCCH message was not successfully decoded by the UE and a false ACK or false NACK was received by the node while subject to the estimated SINR value, and responsive to a probability that: 1) the UL grant PDCCH message was successfully decoded by the UE; or 2) the UL grant PDCCH message was not successfully decoded by the UE and a false UL transmission on the PUSCH was detected by the node while subject to the estimated SINR value. The PDCCH processor 38 then controls (block 1108) how many CCEs are used to communicate a PDCCH message to the UE in response to the adjustment value and to the CSR.

In response to determining (block 1110) that the eNodeB 28 received a UL transmission (corresponding to the UL grant) but did not receive an ACK/NACK (corresponding to the DL assignment) from the UE 30, the PDCCH processor 38 determines (block 1112) an adjustment value responsive to a probability that: 1) the DL assignment PDCCH message was not successfully decoded by the UE; or 2) the DL assignment PDCCH message was successfully decoded by the UE and the node failed to detect an ACK or NACK from the UE while subject to the estimated SINR value, and responsive to a probability that: 1) the UL grant PDCCH message was successfully decoded by the UE; or 2) the UL grant PDCCH message was not successfully decoded by the UE and a false UL transmission on the PUSCH was detected by the node while subject to the estimated SINR value. The PDCCH processor 38 then controls (block 1108) how many CCEs are used to communicate a PDCCH message to the UE in response to the adjustment value and to the CSR.

In response to determining (block 1114) that the eNodeB 28 did not receive a UL transmission (corresponding to the UL grant) but did receive an ACK/NACK (corresponding to the DL assignment) from the UE 30, the PDCCH processor 38 determines (block 1116) an adjustment value responsive to a probability that: 1) the DL assignment PDCCH message was successfully decoded by the UE; or 2) the DL assignment PDCCH message was not successfully decoded by the UE and a false ACK or false NACK was received by the node while subject to the estimated SINR value, and responsive to a probability that: 1) the UL grant PDCCH message was not successfully decoded by the UE; or 2) the UL grant PDCCH message was successfully decoded by the UE and the node failed to detect an UL transmission on the PUSCH from the UE while subject to the estimated SINR value. The PDCCH processor 38 then controls (block 1108) how many CCEs are used to communicate a PDCCH message to the UE in response to the adjustment value and to the CSR.

In response to determining (block 1118) that the eNodeB 28 did not receive a UL transmission (corresponding to the UL grant) and did not receive an ACK/NACK (corresponding to the DL assignment) from the UE 30, the PDCCH processor 38 determines (block 1120) an adjustment value responsive to a probability that: 1) the DL assignment PDCCH message was not successfully decoded by the UE; or 2) the DL assignment PDCCH message was successfully decoded by the UE and the node failed to detect an ACK or NACK from the UE while subject to the estimated SINR value, and responsive to a probability that: 1) the UL grant PDCCH message was not successfully decoded by the UE; or 2) the UL grant PDCCH message was successfully decoded by the UE and the node failed to detect an UL transmission on the PUSCH from the UE while subject to the estimated SINR value. The PDCCH processor 38 then controls (block 1108) how many CCEs are used to communicate a PDCCH message to the UE in response to the adjustment value and to the CSR.

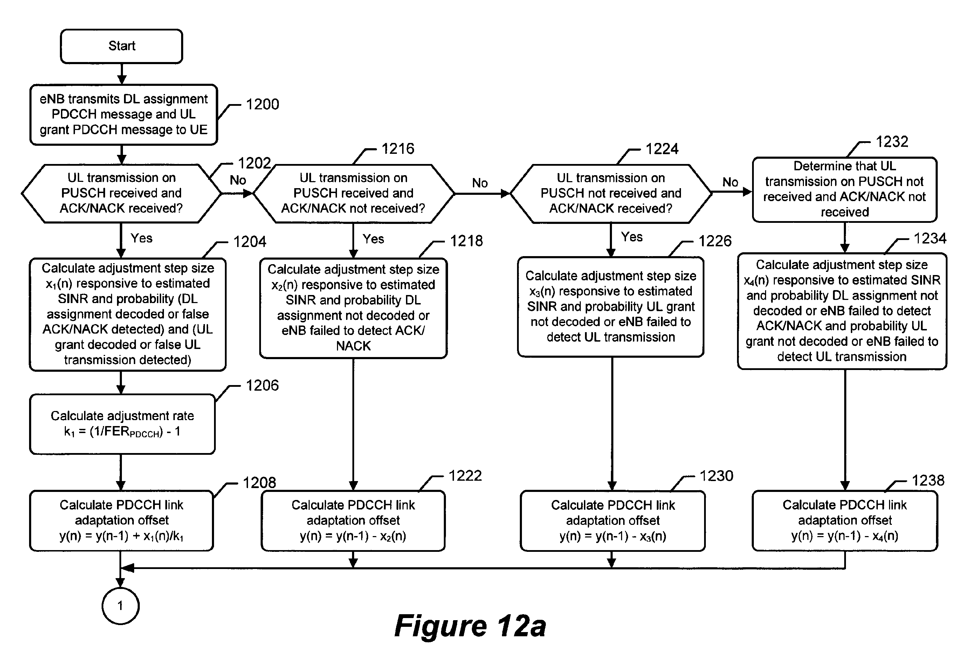

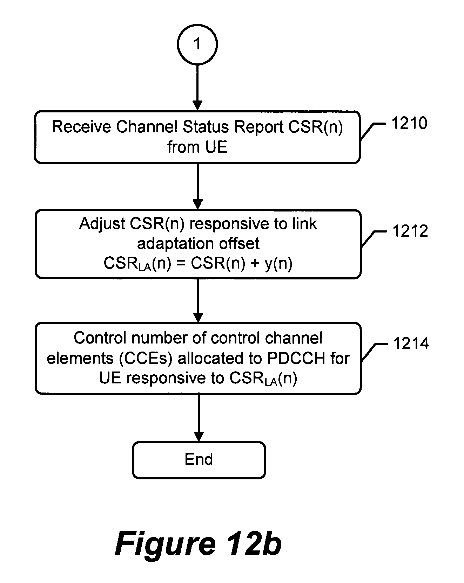

Figures 12a-b illustrate further operations and methods that may be carried-out by the PDCCH processor 38 to control CCE allocation for transmission of a PDCCH message using both a DL assignment message and an UL grant message according to some embodiments. Referring to Figures 12a-b, the PDCCH processor 38 transmits (block 1200) within a same subframe, a DL assignment PDCCH message and an UL grant PDCCH message to the UE 30.

The PDCCH processor 38 determines (block 1202) whether it received a UL transmission (corresponding to the UL grant) on the PUSCH from the UE 30 and received an ACK/NACK (corresponding to the DL assignment) from the UE 30. In response to receiving both, the PDCCH processor 38 calculates (block 1204) an adjustment step size x₁(n) responsive to an estimated SINR and a probability determination that can correspond to the operations of block 1106 of Figure 11. An adjustment rate k₁ is calculated (block 1206) as follows: k₁ = (1/FER_{PDCCH}) - 1, where FER_{PDCCH} is a target frame error rate for the PDCCH. A PDCCH link adaptation offset y(n) is calculated (block 1208) as follows: y(n)=y(n-1)+x₁(n)/k₁. More aggressive link adaptation (e.g., a larger change) may be carried out in the present situation of good channel quality that allowed both the UL transmission and the ACK/NACK to be received, compared to when a lesser quality channel prevents receipt of the UL transmission and/or receipt of the ACK/NACK. A larger step towards more aggressive link adaptation may be carried out for the case where the corresponding feedback for both the DL assignment and the UL grant are received correctly, since, e.g., the reliability of the AC/NACK feedback channel is higher when it is multiplexed on PUSCH compared to when ACK/NACK is transmitted by itself.

In contrast, in response to determining (block 1216) that a UL transmission (corresponding to the UL grant) was received but an ACK/NACK (corresponding to the DL assignment) was not received, an adjustment step size x₂(n) is calculated (block 1218) responsive to an estimated SINR and a probability determination that can correspond to the operations of block 1112 of Figure 11. A PDCCH link adaptation offset y(n) is calculated (block 1230) as follows: y(n)=y(n-1)-x₂(n).

In contrast, in response to determining (block 1224) that a UL transmission (corresponding to the UL grant) was not received but an ACK/NACK (corresponding to the DL assignment) was received, an adjustment step size x₃(n) is calculated (block 1226) responsive to an estimated SINR and a probability determination that can correspond to the operations of block 1116 of Figure 11. A PDCCH link adaptation offset y(n) is calculated (block 1230) as follows: y(n)=y(n-1)-x₃(n).

In contrast, in response to determining (block 1232) that a UL transmission (corresponding to the UL grant) was not received and an ACK/NACK (corresponding to the DL assignment) was not received, an adjustment step size x₃(n) is calculated (block 1234) responsive to an estimated SINR and a probability determination that can correspond to the operations of block 1120 of Figure 11. A PDCCH link adaptation offset y(n) is calculated (block 1230) as follows: y(n)=y(n-1)-x₄(n).

A Channel Status Report (CSR) is received (block 1210) from the UE 30. The CSR is adjusted to generate (block 1212) a PDCCH-adapted-CSR_{LA} value as follows: CSR_{LA}(n)=CSR(n)+y(n). The PDCCH processor 38 then controls (block 1214) how many CCEs are used to communicate a PDCCH message to the UE 30 responsive to the CSR_{LA} value.

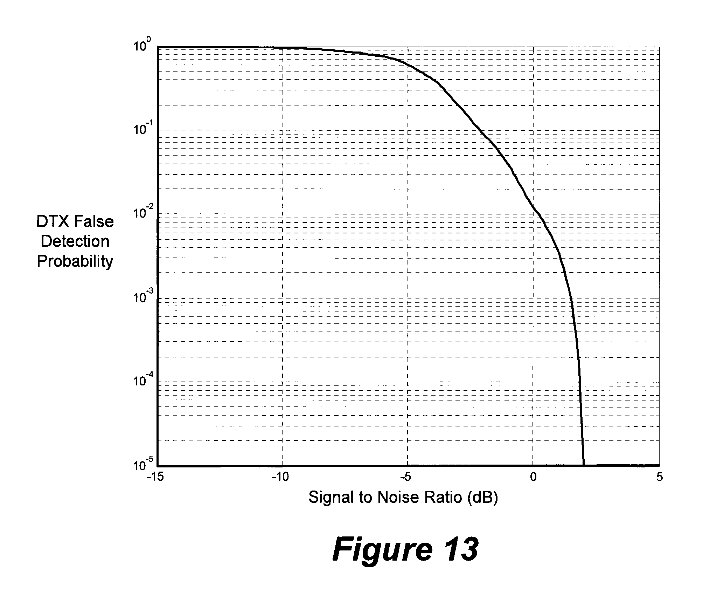

Figure 13 is a graph of an example probability of a network node detecting a false UE response as a function of a signal-to-noise ratio (SNR) of the channel. The graph may be generated through simulations or by real-world measurements and shows the effect of SNR on the number of false UE responses detected by a network node during operation of a communication system. Similar probability graphs may be generated by simulations or by real-world measurements for use in the probability determinations described in blocks 510 and 520 of Figure 5, blocks 604 and 616 of Figure 6, blocks 810 and 820 of Figure 8, blocks 904 and 916 of Figure 9, blocks 1204, 1218, 1226, and 1234 of Figure 12a, and blocks 1106, 1112, 1116, and 1120 of Figure 11.

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Exemplary embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

## Claims

1. A method of operating a node (28) of a telecommunications system (20), the method comprising:
controlling (404) how many Control Channel Elements, CCEs, of a frequency or time division multiplexing radio interface (32) are used to transmit a Physical Downlink Control Channel, PDCCH, message to a User Equipment unit, UE, (30) based on a rate of expected responses that the node (28) does not receive from the UE (30) for previously transmitted PDCCH messages to the UE (30).

2. The method of Claim 1, wherein controlling (404) how many CCEs are used to transmit the PDCCH message to the UE (30) further comprises:
comparing (414) the rate of expected responses that the node (28) does not receive to a threshold value to determine when to increase the number of CCEs that are used to communicate the PDCCH message; and
controlling (420) the threshold value of the comparison based on uplink channel quality from the UE (30) to the node (28) so that as uplink channel quality decreases a higher rate of expected responses that the node (28) does not receive is needed to trigger an increase in the number of CCEs.

3. The method of Claim 1, wherein controlling (404) how many CCEs are used to transmit the PDCCH message to the UE (30) comprises:
communicating (500) a PDCCH message containing a DownLink, DL, assignment to the UE (30);
responding to corresponding receipt of a ACKnowledgement, ACK, or Negative-ACKnowledgement, NACK, from the UE (30) by decreasing (504) how many CCEs are used to communicate a PDCCH message to the UE (30); and
responding to absence of corresponding receipt of the ACK or NACK from the UE (30) by increasing (514) how many CCEs are used to communicate a PDCCH message to the UE (30).

4. The method of Claim 3, further comprising:
receiving (506, 516) a Channel Status Report, CSR, from the UE (30); and
estimating (508, 518) a Signal-to-Interference-and-Noise Ratio, SINR, value for communications from the UE (30),
wherein responding to corresponding receipt of an ACK or NACK from the UE (30) by decreasing (504) how many CCEs are used to communicate a PDCCH message to the UE (30) comprises:
determining (510) an adjustment value responsive to a probability that: 1) the DL assignment was successfully decoded by the UE (30); or 2) the DL assignment was not successfully decoded by the UE (30) and a false ACK or false NACK was received by the node (28) while subject to the estimated SINR value; and
decreasing (512) how many CCEs are used to communicate a PDCCH message to the UE (30) in response to the adjustment value and to the CSR, and
wherein responding to absence of corresponding receipt of the ACK or NACK from the UE (30) by increasing (514) how many CCEs are used to communicate a PDCCH message to the UE (30) comprises:
determining (520) an adjustment value responsive to a probability that: 1) the DL assignment was not successfully decoded by the UE (30); or 2) the DL assignment was successfully decoded by the UE (30) and the node (28) failed to detect an ACK or NACK from the UE (30) while subject to the estimated SINR value; and
increasing (522) how many CCEs are used to communicate a PDCCH message to the UE (30) in response to the adjustment value and to the CSR.

5. The method of Claim 1, wherein controlling (404) how many CCEs are used to transmit the PDCCH message to the UE (30) comprises:
communicating (800) a PDCCH message containing an UpLink, UL, grant to the UE (30);
responding to corresponding receipt of an UL transmission from the UE (30) by decreasing (804) how many CCEs are used to communicate a PDCCH message to the UE (30); and
responding to absence of corresponding receipt of an UL transmission from the UE (30) by increasing (814) how many CCEs are used to communicate a PDCCH message to the UE (30).

6. The method of Claim 5, further comprising:
receiving (806, 816) a Channel Status Report, CSR, from the UE (30); and
estimating (808, 818) a Signal-to-Interference-and-Noise Ratio, SINR, value for communications from the UE (30),
wherein responding to corresponding receipt of the UL transmission from the UE (30) by decreasing (804) how many CCEs are used to communicate a PDCCH message to the UE (30) comprises:
determining (810) an adjustment value responsive to a probability that: 1) the UL grant was successfully decoded by the UE (30); or 2) the UL grant was not successfully decoded and a false UL transmission was detected by the node (28) while subject to the estimated SINR value; and
decreasing (812) how many CCEs are used to communicate a PDCCH message to the UE (30) in response to the adjustment value and to the CSR, and
wherein responding to absence of corresponding receipt of an UL transmission from the UE (30) by increasing (814) how many CCEs are used to communicate a PDCCH message to the UE (30) comprises:
determining (820) an adjustment value responsive to a probability that: 1) the UL grant was not successfully decoded by the UE (30); or 2) the UL grant was successfully decoded by the UE (30) and the node (28) failed to detect an UL transmission from the UE (30) while subject to the estimated SINR value; and
increasing (822) how many CCEs are used to communicate a PDCCH message to the UE (30) in response to the adjustment value and to the CSR.

7. The method of Claim 1, wherein controlling (404) how many CCEs are used to transmit the PDCCH message to the UE (30) comprises:
receiving (1102) a Channel Status Report, CSR, from the UE (30);
communicating (1100) within a same subframe, a DownLink, DL, assignment and an UpLink, UL, grant through PDCCH messages to the UE (30);
responding (1104) to corresponding receipt of an ACKnowledgement, ACK, or Negative-ACKnowledgement, NACK, from the UE (30) and receipt of an UL transmission from the UE (30) by further carrying out:
estimating (1102) a Signal-to-Interference-and-Noise Ratio, SINR, value for
communications from the UE (30);
determining (1106) an adjustment value responsive to a probability that: 1) the
DL assignment was successfully decoded by the UE (30); or 2) the DL assignment was not successfully decoded by the UE (30) and a false ACK or false NACK was received by the node (28) while subject to the estimated SINR value, and responsive to a probability that: 1) the UL grant was successfully decoded by the UE (30); or 2) the UL grant was not successfully decoded by the UE (30) and a false UL transmission was detected by the node (28) while subject to the estimated SINR value; and decreasing (1108) how many CCEs are used to communicate a PDCCH
message to the UE (30) in response to the adjustment value and to the CSR.

8. The method of Claim 1, wherein controlling (404) how many CCEs are used to transmit the PDCCH message to the UE (30) comprises:
receiving (1102) a Channel Status Report, CSR, from the UE (30);
communicating (1100) within a same subframe, a DownLink, DL, assignment and an UpLink, UL, grant through PDCCH messages to the UE (30);
responding (1110) to corresponding receipt of an UL transmission from the UE (30) and to absence of corresponding receipt of the ACK or NACK from the UE (30) by further carrying out:
estimating (1102) a Signal-to-Interference-and-Noise Ratio, SINR, value for
communications from the UE (30);
determining (1112) an adjustment value responsive to a probability that: 1) the
DL assignment was not successfully decoded by the UE (30); or 2) the DL assignment was successfully decoded by the UE (30) and the node (28) failed to detect an ACK or NACK from the UE (30) while subject to the estimated SINR value, and responsive to a probability that: 1) the UL grant was successfully decoded by the UE (30); or 2) the UL grant was not successfully decoded by the UE (30) and a false UL transmission was detected by the node (28) while subject to the estimated SINR value; and controlling (1108) how many CCEs are used to communicate a PDCCH message
to the UE (30) in response to the adjustment value and to the CSR.

9. The method of Claim 1, wherein controlling (404) how many CCEs are used to transmit the PDCCH message to the UE (30) comprises:
receiving (1102) a Channel Status Report, CSR, from the UE (30);
communicating (1100) within a same subframe, a DownLink, DL, assignment and an UpLink, UL, grant through PDCCH messages to the UE (30);
responding (1114) to corresponding receipt of the ACK or NACK from the UE (30) and to absence of corresponding receipt of an UL transmission from the UE (30) by further carrying out:
estimating (1102) a Signal-to-Interference-and-Noise Ratio, SINR, value for
communications from the UE (30);
determining (1116) an adjustment value responsive to a probability that: 1) the
DL assignment was successfully decoded by the UE (30); or 2) the DL assignment was not successfully decoded by the UE (30) and a false ACK or false NACK was received by the node (28) while subject to the estimated SINR value, and responsive to a probability that: 1) the UL grant was not successfully decoded by the UE (30); or 2) the UL grant was successfully decoded by the UE (30) and the node (28) failed to detect an UL transmission from the UE (30) while subject to the estimated SINR value; and
controlling (1108) how many CCEs are used to communicate a PDCCH message
to the UE (30) in response to the adjustment value and to the CSR.

10. The method of Claim 1, wherein controlling (404) how many CCEs are used to transmit the PDCCH message to the UE (30) comprises:
receiving (1102) a Channel Status Report, CSR, from the UE (30);
communicating (1100) within a same subframe, a DownLink, DL, assignment and an UpLink, UL, grant through PDCCH messages to the UE (30);
responding (1118) to absence of corresponding receipt of the ACK or NACK from the UE (30) and to absence of corresponding receipt of an UL transmission from the UE (30) by further carrying out:
estimating (1102) a Signal-to-Interference-and-Noise Ratio, SINR, value for
communications from the UE (30);
determining (1120) an adjustment value responsive to a probability that: 1) the
DL assignment was not successfully decoded by the UE (30); or 2) the DL assignment was successfully decoded by the UE (30) and the node (28) failed to detect an ACK or NACK from the UE (30) while subject to the estimated SINR value, and responsive to a probability that: 1) the UL grant was not successfully decoded by the UE (30); or 2) the UL grant was successfully decoded by the UE (30) and the node (28) failed to detect an UL transmission from the UE (30) while subject to the estimated SINR value; and
increasing (1108) how many CCEs are used to communicate a PDCCH message
to the UE (30) in response to the adjustment value and to the CSR.

11. A node (28) of a telecommunications system (20), the node comprising:
a transceiver (34) configured to communicate over a frequency or time division multiplexing radio interface with a User Equipment unit, UE (30); and
a Physical Downlink Control Channel, PDCCH, processor (38) configured to control (404) how many Control Channel Elements, CCEs, of the radio interface are used to transmit a PDCCH message to the UE (30) based on a rate of expected responses that the node (28) does not receive from the UE (30) for previously transmitted PDCCH messages to the UE (30).

12. The node (28) of Claim 11, wherein the PDCCH processor (38) is further configured to compare (414) the rate of expected responses that the node (28) does not receive to a threshold value to determine when to increase the number of CCEs that are used to communicate the PDCCH message, and to control (420) the threshold value of the comparison based on uplink channel quality from the UE (30) to the node (28) so that as uplink channel quality decreases a higher rate of expected responses that the node (28) does not receive is needed to trigger an increase in the number of CCEs.

13. The node (28) of Claim 11, wherein the PDCCH processor (38) is further configured to:
transmit (500) a PDCCH message containing a DownLink, DL, assignment via the transceiver (34) to the UE (30);
respond to corresponding receipt of an ACKnowledgement, ACK, or Negative-ACKnowledgement, NACK, via the transceiver (34) from the UE (30) by decreasing (504) how many CCEs are used to communicate a PDCCH message to the UE (30); and
respond to absence of corresponding receipt of the ACK or NACK from the UE (30) by increasing (514) how many CCEs are used to communicate a PDCCH message to the UE (30).

14. The node (28) of Claim 13, wherein the PDCCH processor (38) is further configured to:
receive (506, 516) a Channel Status Report, CSR, from the UE (30) via the transceiver (34); and
estimate (508, 518) a Signal-to-Interference-and-Noise Ratio, SINR, value for communications from the UE (30),
wherein, to respond to corresponding receipt of the ACK or NACK from the UE (30) by decreasing (504) how many CCEs are used to communicate a PDCCH message to the UE (30), the PDCCH processor (38) is further configured to:
determine (510) an adjustment value responsive to a probability that: 1) the DL assignment was successfully decoded by the UE (30); or 2) the DL assignment was not successfully decoded by the UE (30) and a false ACK or false NACK was received by the node (28) while subject to the estimated SINR value; and
decrease (512) how many CCEs are used to communicate a PDCCH message to the UE (30) in response to the adjustment value and to the CSR, and
wherein, to respond to absence of corresponding receipt of the ACK or NACK from the UE (30) by increasing (514) how many CCEs are used to communicate a PDCCH message to the UE (30), the PDCCH processor (38) is further configured to:
determine (520) an adjustment value responsive to a probability that: 1) the DL assignment was not successfully decoded by the UE (30); or 2) the DL assignment was successfully decoded by the UE (30) and the node (28) failed to detect an ACK or NACK from the UE (30) while subject to the estimated SINR value; and
increase (522) how many CCEs are used to communicate a PDCCH message to the UE (30) in response to the adjustment value and to the CSR.

15. The node (28) of Claim 11, wherein the PDCCH processor (38) is further configured to:
transmit (800) a PDCCH message containing an UpLink, UL, grant via the transceiver (34) to the UE (30);
respond to corresponding receipt of an UL transmission via the transceiver (34) from the UE (30) by decreasing (804) how many CCEs are used to communicate a PDCCH message to the UE (30); and
respond to absence of corresponding receipt of an UL transmission by increasing (814) how many CCEs are used to communicate a PDCCH message to the UE (30).

## Patentansprüche

1. Verfahren zum Betreiben eines Knotens (28) eines Telekommunikationssystems (20), wobei das Verfahren umfasst:
Steuern (404), wie viele Steuerkanalelemente, CCEs, einer Frequenz- oder Zeitmultiplexfunkschnittstelle (32) verwendet werden, um eine Nachricht des Physischen Abwärtsstreckensteuerkanals, PDCCH, zu einer Benutzereinrichtungseinheit, UE, (30) zu übertragen, und zwar auf der Grundlage einer Rate von erwarteten Antworten, die der Knoten (28) von der UE (30) für vorher übertragene PDCCH-Nachrichten an die UE (30) nicht empfängt.

2. Verfahren nach Anspruch 1, worin das Steuern (404), wie viele CCEs verwendet werden, um die PDCCH-Nachricht an die UE (30) zu übertragen, ferner umfasst:
Vergleichen (414) der Rate von erwarteten Antworten, die der Knoten (28) nicht empfängt, mit einem Schwellwert, um zu bestimmen, wann die Anzahl der CCEs, die verwendet werden, um die PDCCH-Nachricht zu übermitteln, zu erhöhen ist; und
Steuern (420) des Schwellwerts des Vergleichs auf der Grundlage der Aufwärtsstreckenkanalqualität von der UE (30) zum Knoten (28), sodass, wenn die Aufwärtsstreckenkanalqualität abnimmt, eine höhere Rate von erwarteten Antworten, die der Knoten (28) nicht empfängt, benötigt wird, um eine Zunahme der Anzahl von CCEs auszulösen.

3. Verfahren nach Anspruch 1, worin das Steuern (404), wie viele CCEs verwendet werden, um die PDCCH-Nachricht an die UE (30) zu übertragen, umfasst:
Übermitteln (500) einer PDCCH-Nachricht, die eine Zuweisung in der Abwärtsstrecke, DL, enthält, an die UE (30);
Antworten auf den entsprechenden Empfang einer Bestätigung, ACK, oder Nichtbestätigung, NACK, von der UE (30) durch Vermindern (504), wie viele CCEs verwendet werden, um eine PDCCH-Nachricht zur UE (30) zu übermitteln; und
Antworten auf das Ausbleiben des entsprechenden Empfangs der ACK oder NACK von der UE (30) durch Erhöhen (514), wie viele CCEs verwendet werden, um eine PDCCH-Nachricht zur UE (30) zu übermitteln.

4. Verfahren nach Anspruch 3, ferner umfassend:
Empfangen (506, 516) eines Kanalstatusberichts, CSR, von der UE (30); und
Schätzen (508, 518) eines Werts für das Signal-zu-Störleistung-und-Rauschen-Verhältnis, SINR, für Mitteilungen von der UE (30),
worin das Antworten auf den entsprechenden Empfang einer ACK oder NACK von der UE (30) durch Vermindern (504), wie viele CCEs verwendet werden, um eine PDCCH-Nachricht zur UE (30) zu übermitteln, umfasst:
Bestimmen (510) eines Anpassungswerts als Antwort auf eine Wahrscheinlichkeit, dass: 1) die DL-Zuweisung erfolgreich durch die UE (30) decodiert wurde; oder 2) die DL-Zuweisung nicht erfolgreich durch die UE (30) decodiert wurde und eine falsche ACK oder falsche NACK durch den Knoten (28) empfangen wurde, während er dem geschätzten SINR-Wert unterlag; und
Vermindern (512), wie viele CCEs verwendet werden, um eine PDCCH-Nachricht zur UE (30) zu übermitteln, als Antwort auf den Anpassungswert und auf den CSR, und
worin das Antworten auf das Ausbleiben des entsprechenden Empfangs der ACK oder NACK von der UE (30) durch Erhöhen (514), wie viele CCEs verwendet werden, um eine PDCCH-Nachricht zur UE (30) zu übermitteln, umfasst:
Bestimmen (520) eines Anpassungswerts als Antwort auf eine Wahrscheinlichkeit, dass: 1) die DL-Zuweisung nicht erfolgreich durch die UE (30) decodiert wurde; oder 2) die DL-Zuweisung erfolgreich durch die UE (30) decodiert wurde und es dem Knoten (28) nicht gelang, eine ACK oder NACK von der UE (30) zu ermitteln, während er dem geschätzten SINR-Wert unterlag; und
Erhöhen (522), wie viele CCEs verwendet werden, um eine PDCCH-Nachricht zur UE (30) zu übermitteln, als Antwort auf den Anpassungswert und auf den CSR.

5. Verfahren nach Anspruch 1, worin das Steuern (404), wie viele CCEs verwendet werden, um die PDCCH-Nachricht an die UE (30) zu übertragen, umfasst:
Übermitteln (800) einer PDCCH-Nachricht, die eine Bewilligung in der Aufwärtsstrecke, UL, enthält, an die UE (30);
Antworten auf den entsprechenden Empfang einer UL-Übertragung von der UE (30) durch Vermindern (804), wie viele CCEs verwendet werden, um eine PDCCH-Nachricht zur UE (30) zu übermitteln; und
Antworten auf das Ausbleiben des entsprechenden Empfangs einer UL-Übertragung von der UE (30) durch Erhöhen (814), wie viele CCEs verwendet werden, um eine PDCCH-Nachricht zur UE (30) zu übermitteln.

6. Verfahren nach Anspruch 5, ferner umfassend:
Empfangen (806, 816) eines Kanalstatusberichts, CSR, von der UE (30); und
Schätzen (808, 818) eines Werts für das Signal-zu-Störleistung-und-Rauschen-Verhältnis, SINR, für Mitteilungen von der UE (30),
worin das Antworten auf den entsprechenden Empfang der UL-Übertragung von der UE (30) durch Vermindern (804), wie viele CCEs verwendet werden, um eine PDCCH-Nachricht zur UE (30) zu übermitteln, umfasst:
Bestimmen (810) eines Anpassungswerts als Antwort auf eine Wahrscheinlichkeit, dass: 1) die UL-Bewilligung erfolgreich durch die UE (30) decodiert wurde; oder 2) die UL-Bewilligung nicht erfolgreich durch die UE (30) decodiert wurde und eine falsche UL-Übertragung durch den Knoten (28) ermittelt wurde, während er dem geschätzten SINR-Wert unterlag; und
Vermindern (812), wie viele CCEs verwendet werden, um eine PDCCH-Nachricht zur UE (30) zu übermitteln, als Antwort auf den Anpassungswert und auf den CSR, und
worin das Antworten auf das Ausbleiben des entsprechenden Empfangs einer UL-Übertragung von der UE (30) durch Erhöhen (584), wie viele CCEs verwendet werden, um eine PDCCH-Nachricht zur UE (30) zu übermitteln, umfasst:
Bestimmen (820) eines Anpassungswerts als Antwort auf eine Wahrscheinlichkeit, dass: 1) die UL-Bewilligung nicht erfolgreich durch die UE (30) decodiert wurde; oder 2) die UL-Bewilligung erfolgreich durch die UE (30) decodiert wurde und es dem Knoten (28) nicht gelang, eine UL-Übertragung von der UE (30) zu ermitteln, während er dem geschätzten SINR-Wert unterlag; und
Erhöhen (822), wie viele CCEs verwendet werden, um eine PDCCH-Nachricht zur UE (30) zu übermitteln, als Antwort auf den Anpassungswert und auf den CSR.

7. Verfahren nach Anspruch 1, worin das Steuern (404), wie viele CCEs verwendet werden, um die PDCCH-Nachricht an die UE (30) zu übertragen, umfasst:
Empfangen (1102) eines Kanalstatusberichts, CSR, von der UE (30);
innerhalb eines gleichen Teilrahmens erfolgendes Übermitteln (1100) durch PDCCH-Nachrichten, einer Zuweisung in der Abwärtsstrecke, DL, und einer Bewilligung in der Aufwärtsstrecke, UL, an die UE (30);
Antworten (1104) auf den entsprechenden Empfang einer Bestätigung, ACK, oder Nichtbestätigung, NACK, von der UE (30) und Empfang einer UL-Übertragung von der UE (30), indem ferner Folgendes durchgeführt wird:
Schätzen (1102) eines Werts für das Signal-zu-Störleistung-und-Rauschen-Verhältnis, SINR, für Mitteilungen von der UE (30);
Bestimmen (1106) eines Anpassungswerts als Antwort auf eine Wahrscheinlichkeit, dass: 1) die DL-Zuweisung erfolgreich durch die UE (30) decodiert wurde; oder 2) die DL-Zuweisung nicht erfolgreich durch die UE (30) decodiert wurde und eine falsche ACK oder falsche NACK durch den Knoten (28) empfangen wurde, während er dem geschätzten SINR-Wert unterlag, und als Antwort auf eine Wahrscheinlichkeit, dass: 1) die UL-Bewilligung erfolgreich durch die UE (30) decodiert wurde; oder 2) die UL-Bewilligung nicht erfolgreich durch die UE (30) decodiert wurde und eine falsche UL-Übertragung durch den Knoten (28) ermittelt wurde, während er dem geschätzten SINR-Wert unterlag; und
Vermindern (1108), wie viele CCEs verwendet werden, um eine PDCCH-Nachricht zur UE (30) zu übermitteln, als Antwort auf den Anpassungswert und auf den CSR.

8. Verfahren nach Anspruch 1, worin das Steuern (404), wie viele CCEs verwendet werden, um die PDCCH-Nachricht an die UE (30) zu übertragen, umfasst:
Empfangen (1102) eines Kanalstatusberichts, CSR, von der UE (30);
innerhalb eines gleichen Teilrahmens erfolgendes Übermitteln (1100) durch PDCCH-Nachrichten, einer Zuweisung in der Abwärtsstrecke, DL, und einer Bewilligung in der Aufwärtsstrecke, UL, an die UE (30);
Antworten (1110) auf den entsprechenden Empfang einer UL-Übertragung von der UE (30) und auf das Ausbleiben des entsprechenden Empfangs der ACK oder NACK von der UE (30), indem ferner Folgendes durchgeführt wird:
Schätzen (1102) eines Werts für das Signal-zu-Störleistung-und-Rauschen-Verhältnis, SINR, für Mitteilungen von der UE (30);
Bestimmen (1112) eines Anpassungswerts als Antwort auf eine Wahrscheinlichkeit, dass: 1) die DL-Zuweisung nicht erfolgreich durch die UE (30) decodiert wurde; oder 2) die DL-Zuweisung erfolgreich durch die UE (30) decodiert wurde und es dem Knoten (28) nicht gelang, eine ACK oder NACK von der UE (30) zu ermitteln, während er dem geschätzten SINR-Wert unterlag, und als Antwort auf eine Wahrscheinlichkeit, dass: 1) die UL-Bewilligung erfolgreich durch die UE (30) decodiert wurde; oder 2) die UL-Bewilligung nicht erfolgreich durch die UE (30) decodiert wurde und eine falsche UL-Übertragung durch den Knoten (28) ermittelt wurde, während er dem geschätzten SINR-Wert unterlag; und
Steuern (1108), wie viele CCEs verwendet werden, um eine PDCCH-Nachricht zur UE (30) zu übermitteln, als Antwort auf den Anpassungswert und auf den CSR.

9. Verfahren nach Anspruch 1, worin das Steuern (404), wie viele CCEs verwendet werden, um die PDCCH-Nachricht an die UE (30) zu übertragen, umfasst:
Empfangen (1102) eines Kanalstatusberichts, CSR, von der UE (30);
innerhalb eines gleichen Teilrahmens erfolgendes Übermitteln (1100) durch PDCCH-Nachrichten, einer Zuweisung in der Abwärtsstrecke, DL, und einer Bewilligung in der Aufwärtsstrecke, UL, an die UE (30);
Antworten (1114) auf den entsprechenden Empfang einer Bestätigung, ACK, oder NACK, von der UE (30) und auf das Ausbleiben des entsprechenden Empfangs einer UL-Übertragung von der UE (30), indem ferner Folgendes durchgeführt wird:
Schätzen (1102) eines Werts für das Signal-zu-Störleistung-und-Rauschen-Verhältnis, SINR, für Mitteilungen von der UE (30);
Bestimmen (1116) eines Anpassungswerts als Antwort auf eine Wahrscheinlichkeit, dass: 1) die DL-Zuweisung erfolgreich durch die UE (30) decodiert wurde; oder 2) die DL-Zuweisung nicht erfolgreich durch die UE (30) decodiert wurde und eine falsche ACK oder falsche NACK durch den Knoten (28) empfangen wurde, während er dem geschätzten SINR-Wert unterlag, und als Antwort auf eine Wahrscheinlichkeit, dass: 1) die UL-Bewilligung nicht erfolgreich durch die UE (30) decodiert wurde; oder 2) die UL-Bewilligung erfolgreich durch die UE (30) decodiert wurde und es dem Knoten (28) nicht gelang, eine UL-Übertragung von der UE (30) zu ermitteln, während er dem geschätzten SINR-Wert unterlag; und
Steuern (1108), wie viele CCEs verwendet werden, um eine PDCCH-Nachricht zur UE (30) zu übermitteln, als Antwort auf den Anpassungswert und auf den CSR.

10. Verfahren nach Anspruch 1, worin das Steuern (404), wie viele CCEs verwendet werden, um die PDCCH-Nachricht an die UE (30) zu übertragen, umfasst:
Empfangen (1102) eines Kanalstatusberichts, CSR, von der UE (30);
innerhalb eines gleichen Teilrahmens erfolgendes Übermitteln (1100) durch PDCCH-Nachrichten, einer Zuweisung in der Abwärtsstrecke, DL, und einer Bewilligung in der Aufwärtsstrecke, UL, an die UE (30);
Antworten (1118) auf den entsprechenden Empfang einer Bestätigung, ACK oder NACK, von der UE (30) und auf das Ausbleiben des entsprechenden Empfangs einer UL-Übertragung von der UE (30), indem ferner Folgendes durchgeführt wird:
Schätzen (1102) eines Werts für das Signal-zu-Störleistung-und-Rauschen-Verhältnis, SINR, für Mitteilungen von der UE (30);
Bestimmen (1120) eines Anpassungswerts als Antwort auf eine Wahrscheinlichkeit, dass: 1) die DL-Zuweisung nicht erfolgreich durch die UE (30) decodiert wurde; oder 2) die DL-Zuweisung erfolgreich durch die UE (30) decodiert wurde und es dem Knoten (28) nicht gelang, eine ACK oder NACK von der UE (30) zu ermitteln, während er dem geschätzten SINR-Wert unterlag, und als Antwort auf eine Wahrscheinlichkeit, dass: 1) die UL-Bewilligung nicht erfolgreich durch die UE (30) decodiert wurde; oder 2) die UL-Bewilligung erfolgreich durch die UE (30) decodiert wurde und es dem Knoten (28) nicht gelang, eine UL-Übertragung von der UE (30) zu ermitteln, während er dem geschätzten SINR-Wert unterlag; und
Erhöhen (1108), wie viele CCEs verwendet werden, um eine PDCCH-Nachricht zur UE (30) zu übermitteln, als Antwort auf den Anpassungswert und auf den CSR.

11. Knoten (28) eines Telekommunikationssystems (20), wobei der Knoten umfasst:
einen Sendeempfänger (34), der dafür konfiguriert ist, über eine Frequenz- oder Zeitmultiplexfunkschnittstelle mit einer Benutzereinrichtungseinheit, UE, (30) zu kommunizieren; und
einen Prozessor für den Physischen Abwärtsstreckensteuerkanal, PDCCH (38), der dafür konfiguriert ist, zu steuern (404), wie viele Steuerkanalelemente, CCEs, der Funkschnittstelle verwendet werden, um eine PDCCH-Nachricht zu der UE (30) zu übertragen, und zwar auf der Grundlage einer Rate von erwarteten Antworten, die der Knoten (28) von der UE (30) für vorher übertragene PDCCH-Nachrichten an die UE (30) nicht empfängt.

12. Knoten (28) nach Anspruch 11, worin der PDCCH-Prozessor (38) ferner dafür konfiguriert ist, die Rate von erwarteten Antworten, die der Knoten (28) nicht empfängt, mit einem Schwellwert zu vergleichen (404), um zu bestimmen, wann die Anzahl der CCEs, die verwendet werden, um die PDCCH-Nachricht zu übermitteln, zu erhöhen ist, und den Schwellwert des Vergleichs auf der Grundlage der Aufwärtsstreckenkanalqualität von der UE (30) zum Knoten (28) so zu steuern (420), dass, wenn die Aufwärtsstreckenkanalqualität abnimmt, eine höhere Rate von erwarteten Antworten, die der Knoten (28) nicht empfängt, benötigt wird, um eine Zunahme der Anzahl von CCEs auszulösen.

13. Knoten (28) nach Anspruch 11, worin der PDCCH-Prozessor (38) ferner konfiguriert ist zum:
Übermitteln (500) einer PDCCH-Nachricht, die eine Zuweisung in der Abwärtsstrecke, DL, enthält, über den Sendeempfänger (34) an die UE (30);
Antworten auf den entsprechenden Empfang einer Bestätigung, ACK, oder Nichtbestätigung, NACK, über den Sendeempfänger (34) von der UE (30) durch Vermindern (504), wie viele CCEs verwendet werden, um eine PDCCH-Nachricht zur UE (30) zu übermitteln; und
Antworten auf das Ausbleiben des entsprechenden Empfangs der ACK oder NACK von der UE (30) durch Erhöhen (514), wie viele CCEs verwendet werden, um eine PDCCH-Nachricht zur UE (30) zu übermitteln.

14. Knoten (28) nach Anspruch 13, worin der PDCCH-Prozessor (38) ferner konfiguriert ist zum:
Empfangen (506, 516) eines Kanalstatusberichts, CSR, von der UE (30) über den Sendeempfänger (34); und
Schätzen (508, 518) eines Werts für das Signal-zu-Störleistung-und-Rauschen-Verhältnis, SINR, für Mitteilungen von der UE (30),
worin der PDCCH-Prozessor (38), um auf den entsprechenden Empfang der ACK oder NACK von der UE (30) durch Vermindern (504), wie viele CCEs verwendet werden, um eine PDCCH-Nachricht zur UE (30) zu übermitteln, zu antworten, ferner konfiguriert ist zum:
Bestimmen (510) eines Anpassungswerts als Antwort auf eine Wahrscheinlichkeit, dass: 1) die DL-Zuweisung erfolgreich durch die UE (30) decodiert wurde; oder 2) die DL-Zuweisung nicht erfolgreich durch die UE (30) decodiert wurde und eine falsche ACK oder falsche NACK durch den Knoten (28) empfangen wurde, während er dem geschätzten SINR-Wert unterlag; und
Vermindern (512), wie viele CCEs verwendet werden, um eine PDCCH-Nachricht zur UE (30) zu übermitteln, als Antwort auf den Anpassungswert und auf den CSR, und
worin der PDCCH-Prozessor (38), um auf das Ausbleiben des entsprechenden Empfangs der ACK oder NACK von der UE (30) durch Erhöhen (514), wie viele CCEs verwendet werden, um eine PDCCH-Nachricht zur UE (30) zu übermitteln, zu antworten, ferner konfiguriert ist zum:
Bestimmen (520) eines Anpassungswerts als Antwort auf eine Wahrscheinlichkeit, dass: 1) die DL-Zuweisung nicht erfolgreich durch die UE (30) decodiert wurde; oder 2) die DL-Zuweisung erfolgreich durch die UE (30) decodiert wurde und es dem Knoten (28) nicht gelang, eine ACK oder NACK von der UE (30) zu ermitteln, während er dem geschätzten SINR-Wert unterlag; und
Erhöhen (522), wie viele CCEs verwendet werden, um eine PDCCH-Nachricht zur UE (30) zu übermitteln, als Antwort auf den Anpassungswert und auf den CSR.

15. Knoten (28) nach Anspruch 11, worin der PDCCH-Prozessor (38) ferner konfiguriert ist zum:
Übermitteln (800) einer PDCCH-Nachricht, die eine Bewilligung in der Aufwärtsstrecke, UL, enthält, über den Sendeempfänger (34) an die UE (30);
Antworten auf den entsprechenden Empfang einer UL-Übertragung über den Sendeempfänger (34) von der UE (30) durch Vermindern (804), wie viele CCEs verwendet werden, um eine PDCCH-Nachricht zur UE (30) zu übermitteln; und
Antworten auf das Ausbleiben des entsprechenden Empfangs einer UL-Übertragung durch Erhöhen (814), wie viele CCEs verwendet werden, um eine PDCCH-Nachricht zur UE (30) zu übermitteln.

## Revendications

1. Procédé d'exploitation d'un noeud (28) d'un système de télécommunication (20), le procédé comportant les étapes ci-dessous consistant à :
commander (404) le nombre d'éléments de canal de commande, CCE, d'une interface radio de multiplexage par répartition dans le temps et en fréquence (32), qui sont utilisés en vue de transmettre un message de canal de commande en liaison descendante physique, PDCCH, à une unité d'équipement d'utilisateur, UE, (30) sur la base d'un taux de réponses attendues que le noeud (28) ne reçoit pas en provenance de l'équipement UE (30) pour des messages de canal PDCCH précédemment transmis à l'équipement UE (30).

2. Procédé selon la revendication 1, dans lequel l'étape consistant à commander (404) le nombre d'éléments CCE qui sont utilisés en vue de transmettre le message de canal PDCCH à l'équipement UE (30) comporte en outre les étapes ci-dessous consistant à :
comparer (414) le taux de réponses attendues que le noeud (28) ne reçoit pas à une valeur de seuil, en vue de déterminer à quel moment il convient d'augmenter le nombre d'éléments CCE qui sont utilisés en vue de communiquer le message de canal PDCCH ;
et
commander (420) la valeur de seuil de la comparaison sur la base d'une qualité de canal en liaison montante, de l'équipement UE (30) au noeud (28), de sorte qu'à mesure que la qualité de canal en liaison montante diminue, un taux supérieur de réponses attendues que le noeud (28) ne reçoit pas est requis en vue de déclencher une augmentation du nombre d'éléments CCE.

3. Procédé selon la revendication 1, dans lequel l'étape consistant à commander (404) le nombre d'éléments CCE qui sont utilisés en vue de transmettre le message de canal PDCCH à l'équipement UE (30) comporte les étapes ci-dessous consistant à :
communiquer (500) un message de canal PDCCH contenant une affectation de liaison descendante, DL, à l'équipement UE (30) ;
répondre à la réception correspondante d'un accusé de réception, ACK, ou d'un accusé de non-réception, NACK, en provenance de l'équipement UE (30) en diminuant (504) le nombre d'éléments CCE qui sont utilisés en vue de communiquer un message de canal PDCCH à l'équipement UE (30) ; et
répondre à une absence de réception correspondante de l'accusé ACK ou de l'accusé NACK en provenance de l'équipement UE (30) en augmentant (514) le nombre d'éléments CCE qui sont utilisés en vue de communiquer un message de canal PDCCH à l'équipement UE (30).

4. Procédé selon la revendication 3, comportant en outre les étapes ci-dessous consistant à :
recevoir (506, 516) un rapport d'état de canal, CSR, en provenance de l'équipement UE (30) ; et
estimer (508, 518) une valeur de rapport « signal sur brouillage plus bruit », SINR, pour des communications en provenance de l'équipement UE (30) ;
dans lequel l'étape consistant à répondre à la réception correspondante d'un accusé ACK ou d'un accusé NACK en provenance de l'équipement UE (30) en diminuant (504) le nombre d'éléments CCE qui sont utilisés en vue de communiquer un message de canal PDCCH à l'équipement UE (30) comporte les étapes ci-dessous consistant à :
déterminer (510) une valeur d'ajustement en réponse à une probabilité que : 1) l'affectation de liaison DL a été correctement décodée par l'équipement UE (30) ; ou 2) l'affectation de liaison DL n'a pas été correctement décodée par l'équipement UE (30) et un faux accusé ACK ou un faux accusé NACK a été reçu par le noeud (28) alors qu'il est soumis à la valeur de rapport SINR estimée ; et
diminuer (512) le nombre d'éléments CCE qui sont utilisés en vue de communiquer un message de canal PDCCH à l'équipement UE (30) en réponse à la valeur d'ajustement et au rapport CSR ; et
dans lequel l'étape consistant à répondre à une absence de réception correspondante de l'accusé ACK ou de l'accusé NACK en provenance de l'équipement UE (30) en augmentant (514) le nombre d'éléments CCE qui sont utilisés en vue de communiquer un message de canal PDCCH à l'équipement UE (30) comporte les étapes ci-dessous consistant à :
déterminer (520) une valeur d'ajustement en réponse à une probabilité que : 1) l'affectation de liaison DL n'a pas été correctement décodée par l'équipement UE (30) ; ou 2) l'affectation de liaison DL a été correctement décodée par l'équipement UE (30) et le noeud (28) n'est pas parvenu à détecter un accusé ACK ou un accusé NACK en provenance de l'équipement UE (30) alors qu'il est soumis à la valeur de rapport SINR estimée ; et
augmenter (522) le nombre d'éléments CCE qui sont utilisés en vue de communiquer un message de canal PDCCH à l'équipement UE (30) en réponse à la valeur d'ajustement et au rapport CSR.

5. Procédé selon la revendication 1, dans lequel l'étape consistant à commander (404) le nombre d'éléments CCE qui sont utilisés en vue de transmettre le message de canal PDCCH à l'équipement UE (30) comporte les étapes ci-dessous consistant à :
communiquer (800) un message de canal PDCCH contenant un octroi de liaison montante, UL, à l'équipement UE (30) ;
répondre à la réception correspondante d'une transmission en liaison UL en provenance de l'équipement UE (30) en diminuant (804) le nombre d'éléments CCE qui sont utilisés en vue de communiquer un message de canal PDCCH à l'équipement UE (30) ; et
répondre à une absence de réception correspondante d'une transmission en liaison UL en provenance de l'équipement UE (30) en augmentant (814) le nombre d'éléments CCE qui sont utilisés en vue de communiquer un message de canal PDCCH à l'équipement UE (30).

6. Procédé selon la revendication 5, comportant en outre les étapes ci-dessous consistant à :
recevoir (806, 816) un rapport d'état de canal, CSR, en provenance de l'équipement UE (30) ; et
estimer (808, 818) une valeur de rapport « signal sur brouillage plus bruit », SINR, pour des communications en provenance de l'équipement UE (30) ;
dans lequel l'étape consistant à répondre à la réception correspondante de la transmission en liaison UL en provenance de l'équipement UE (30) en diminuant (804) le nombre d'éléments CCE qui sont utilisés en vue de communiquer un message de canal PDCCH à l'équipement UE (30) comporte les étapes ci-dessous consistant à :
déterminer (810) une valeur d'ajustement en réponse à une probabilité que : 1) l'octroi de liaison UL a été correctement décodé par l'équipement UE (30) ; ou 2) l'octroi de liaison UL n'a pas été correctement décodé et une fausse transmission en liaison UL a été détectée par le noeud (28) alors qu'il est soumis à la valeur de rapport SINR estimée ; et
diminuer (812) le nombre d'éléments CCE qui sont utilisés en vue de communiquer un message de canal PDCCH à l'équipement UE (30) en réponse à la valeur d'ajustement et au rapport CSR ; et
dans lequel l'étape consistant à répondre à une absence de réception correspondante d'une transmission en liaison UL en provenance de l'équipement UE (30) en augmentant (814) le nombre d'éléments CCE qui sont utilisés en vue de communiquer un message de canal PDCCH à l'équipement UE (30) comporte les étapes ci-dessous consistant à :
déterminer (820) une valeur d'ajustement en réponse à une probabilité que : 1) l'octroi de liaison UL n'a pas été correctement décodé par l'équipement UE (30) ; ou 2) l'octroi de liaison UL a été correctement décodé par l'équipement UE (30) et le noeud (28) n'est pas parvenu à détecter une transmission en liaison UL en provenance de l'équipement UE (30) alors qu'il est soumis à la valeur de rapport SINR estimée ; et
augmenter (822) le nombre d'éléments CCE qui sont utilisés en vue de communiquer un message de canal PDCCH à l'équipement UE (30) en réponse à la valeur d'ajustement et au rapport CSR.

7. Procédé selon la revendication 1, dans lequel l'étape consistant à commander (404) le nombre d'éléments CCE qui sont utilisés en vue de transmettre le message de canal PDCCH à l'équipement UE (30) comporte les étapes ci-dessous consistant à :
recevoir (1102) un rapport d'état de canal, CSR, en provenance de l'équipement UE (30) ;
communiquer (1100) au sein d'une même sous-trame, une affectation de liaison descendante, DL, et un octroi de liaison montante, UL, par le biais de messages de canal PDCCH à l'équipement UE (30) ;
répondre (1104) à la réception correspondante d'un accusé de réception, ACK, ou d'un accusé de non-réception, NACK, en provenance de l'équipement UE (30), et à la réception d'une transmission en liaison UL en provenance de l'équipement UE (30) en mettant en outre en oeuvre les étapes ci-dessous consistant à :
estimer (1102) une valeur de rapport « signal sur brouillage plus bruit », SINR, pour des communications en provenance de l'équipement UE (30) ;
déterminer (1106) une valeur d'ajustement en réponse à une probabilité que : 1) l'affectation de liaison DL a été correctement décodée par l'équipement UE (30) ; ou 2) l'affectation de liaison DL n'a pas été correctement décodée par l'équipement UE (30) et un faux accusé ACK ou un faux accusé NACK a été reçu par le noeud (28) alors qu'il est soumis à la valeur de rapport SINR estimée, et en réponse à une probabilité que : 1) l'octroi de liaison UL a été correctement décodé par l'équipement UE (30) ; ou 2) l'octroi de liaison UL n'a pas été correctement décodé par l'équipement UE (30) et une fausse transmission en liaison UL a été détectée par le noeud (28) alors qu'il est soumis à la valeur de rapport SINR estimée ; et
diminuer (1108) le nombre d'éléments CCE qui sont utilisés en vue de communiquer un message de canal PDCCH à l'équipement UE (30) en réponse à la valeur d'ajustement et au rapport CSR.

8. Procédé selon la revendication 1, dans lequel l'étape consistant à commander (404) le nombre d'éléments CCE qui sont utilisés en vue de transmettre le message de canal PDCCH à l'équipement UE (30) comporte les étapes ci-dessous consistant à :
recevoir (1102) un rapport d'état de canal, CSR, en provenance de l'équipement UE (30) ;
communiquer (1100) au sein d'une même sous-trame, une affectation de liaison descendante, DL, et un octroi de liaison montante, UL, par le biais de messages de canal PDCCH à l'équipement UE (30) ;
répondre (1110) à la réception correspondante d'une transmission en liaison UL en provenance de l'équipement UE (30) et à l'absence de réception correspondante de l'accusé ACK ou de l'accusé NACK en provenance de l'équipement UE (30) en mettant en outre en oeuvre les étapes ci-dessous consistant à :
estimer (1102) une valeur de rapport « signal sur brouillage plus bruit », SINR, pour des communications en provenance de l'équipement UE (30) ;
déterminer (1112) une valeur d'ajustement en réponse à une probabilité que : 1) l'affectation de liaison DL n'a pas été correctement décodée par l'équipement UE (30) ;
ou 2) l'affectation de liaison DL a été correctement décodée par l'équipement UE (30) et le noeud (28) n'est pas parvenu à détecter un accusé ACK ou un accusé NACK en provenance de l'équipement UE (30) alors qu'il est soumis à la valeur de rapport SINR estimée, et en réponse à une probabilité que : 1) l'octroi de liaison UL a été correctement décodé par l'équipement UE (30) ; ou 2) l'octroi de liaison UL n'a pas été correctement décodé par l'équipement UE (30) et une fausse transmission en liaison UL a été détectée par le noeud (28) alors qu'il est soumis à la valeur de rapport SINR estimée ; et
commander (1108) le nombre d'éléments CCE qui sont utilisés en vue de communiquer un message de canal PDCCH à l'équipement UE (30) en réponse à la valeur d'ajustement et au rapport CSR.

9. Procédé selon la revendication 1, dans lequel l'étape consistant à commander (404) le nombre d'éléments CCE qui sont utilisés en vue de transmettre le message de canal PDCCH à l'équipement UE (30) comporte les étapes ci-dessous consistant à :
recevoir (1102) un rapport d'état de canal, CSR, en provenance de l'équipement UE (30) ;
communiquer (1100) au sein d'une même sous-trame, une affectation de liaison descendante, DL, et un octroi de liaison montante, UL, par le biais de messages de canal PDCCH à l'équipement UE (30) ;
répondre (1114) à la réception correspondante de l'accusé ACK ou de l'accusé NACK en provenance de l'équipement UE (30) et à l'absence de réception correspondante d'une transmission en liaison UL en provenance de l'équipement UE (30) en mettant en outre en oeuvre les étapes ci-dessous consistant à :
estimer (1102) une valeur de rapport « signal sur brouillage plus bruit », SINR, pour des communications en provenance de l'équipement UE (30) ;
déterminer (1116) une valeur d'ajustement en réponse à une probabilité que : 1) l'affectation de liaison DL a été correctement décodée par l'équipement UE (30) ; ou 2) l'affectation de liaison DL n'a pas été correctement décodée par l'équipement UE (30) et un faux accusé ACK ou un faux accusé NACK a été reçu par le noeud (28) alors qu'il est soumis à la valeur de rapport SINR estimée, et en réponse à une probabilité que : 1) l'octroi de liaison UL n'a pas été correctement décodé par l'équipement UE (30) ; ou 2) l'octroi de liaison UL a été correctement décodé par l'équipement UE (30) et le noeud (28) n'est pas parvenu à détecter une transmission en liaison UL en provenance de l'équipement UE (30) alors qu'il est soumis à la valeur de rapport SINR estimée ; et
commander (1108) le nombre d'éléments CCE qui sont utilisés en vue de communiquer un message de canal PDCCH à l'équipement UE (30) en réponse à la valeur d'ajustement et au rapport CSR.

10. Procédé selon la revendication 1, dans lequel l'étape consistant à commander (404) le nombre d'éléments CCE qui sont utilisés en vue de transmettre le message de canal PDCCH à l'équipement UE (30) comporte les étapes ci-dessous consistant à :
recevoir (1102) un rapport d'état de canal, CSR, en provenance de l'équipement UE (30) ;
communiquer (1100) au sein d'une même sous-trame, une affectation de liaison descendante, DL, et un octroi de liaison montante, UL, par le biais de messages de canal PDCCH à l'équipement UE (30) ;
répondre (1118) à l'absence de réception correspondante de l'accusé ACK ou de l'accusé NACK en provenance de l'équipement UE (30) et à l'absence de réception correspondante d'une transmission en liaison UL en provenance de l'équipement UE (30) en mettant en outre en oeuvre les étapes ci-dessous consistant à :
estimer (1102) une valeur de rapport « signal sur brouillage plus bruit », SINR, pour des communications en provenance de l'équipement UE (30) ;
déterminer (1120) une valeur d'ajustement en réponse à une probabilité que : 1) l'affectation de liaison DL n'a pas été correctement décodée par l'équipement UE (30) ; ou 2) l'affectation de liaison DL a été correctement décodée par l'équipement UE (30) et le noeud (28) n'est pas parvenu à détecter un accusé ACK ou un accusé NACK en provenance de l'équipement UE (30) alors qu'il est soumis à la valeur de rapport SINR estimée, et en réponse à une probabilité que : 1) l'octroi de liaison UL n'a pas été correctement décodé par l'équipement UE (30) ; ou 2) l'octroi de liaison UL a été correctement décodé par l'équipement UE (30) et le noeud (28) n'est pas parvenu à détecter une transmission en liaison UL en provenance de l'équipement UE (30) alors qu'il est soumis à la valeur de rapport SINR estimée ; et
augmenter (1108) le nombre d'éléments CCE qui sont utilisés en vue de communiquer un message de canal PDCCH à l'équipement UE (30) en réponse à la valeur d'ajustement et au rapport CSR.

11. Noeud (28) d'un système de télécommunication (20), le noeud comportant :
un émetteur-récepteur (34) configuré de manière à communiquer sur une interface radio de multiplexage par répartition dans le temps et en fréquence avec une unité d'équipement d'utilisateur, UE (30) ; et
un processeur de canal de commande en liaison descendante physique, PDCCH, (38) configuré de manière à commander (404) le nombre d'éléments de canal de commande, CCE, de l'interface radio, qui sont utilisés en vue de transmettre un message de canal PDCCH à l'équipement UE (30) sur la base d'un taux de réponses attendues que le noeud (28) ne reçoit pas en provenance de l'équipement UE (30) pour des messages de canal PDCCH précédemment transmis à l'équipement UE (30).

12. Noeud (28) selon la revendication 11, dans lequel le processeur de canal PDCCH (38) est en outre configuré de manière à comparer (414) le taux de réponses attendues que le noeud (28) ne reçoit pas, à une valeur de seuil, en vue de déterminer à quel moment il convient d'augmenter le nombre d'éléments CCE qui sont utilisés en vue de communiquer le message de canal PDCCH, et à commander (420) la valeur de seuil de la comparaison sur la base d'une qualité de canal en liaison montante de l'équipement UE (30) au noeud (28), de sorte qu'à mesure que la qualité de canal en liaison montante diminue, un taux supérieur de réponses attendues que le noeud (28) ne reçoit pas est requis en vue de déclencher une augmentation du nombre d'éléments CCE.

13. Noeud (28) selon la revendication 11, dans lequel le processeur de canal PDCCH (38) est en outre configuré de manière à :
transmettre (500) un message de canal PDCCH contenant une affectation de liaison descendante, DL, par l'intermédiaire de l'émetteur-récepteur (34), à l'équipement UE (30) ;
répondre à la réception correspondante d'un accusé de réception, ACK, ou d'un accusé de non-réception, NACK, par l'intermédiaire de l'émetteur-récepteur (34), en provenance de l'équipement UE (30), en diminuant (504) le nombre d'éléments CCE qui sont utilisés en vue de communiquer un message de canal PDCCH à l'équipement UE (30) ; et
répondre à l'absence de réception correspondante de l'accusé ACK ou de l'accusé NACK en provenance de l'équipement UE (30) en augmentant (514) le nombre d'éléments CCE qui sont utilisés en vue de communiquer un message de canal PDCCH à l'équipement UE (30).

14. Noeud (28) selon la revendication 13, dans lequel le processeur de canal PDCCH (38) est en outre configuré de manière à :
recevoir (506, 516) un rapport d'état de canal, CSR, en provenance de l'équipement UE (30) par l'intermédiaire de l'émetteur-récepteur (34) ; et
estimer (508, 518) une valeur de rapport « signal sur brouillage plus bruit », SINR, pour des communications en provenance de l'équipement UE (30) ;
dans lequel, pour répondre à la réception correspondante de l'accusé ACK ou de l'accusé NACK en provenance de l'équipement UE (30) en diminuant (504) le nombre d'éléments CCE qui sont utilisés en vue de communiquer un message de canal PDCCH à l'équipement UE (30), le processeur de canal PDCCH (38) est en outre configuré de manière à :
déterminer (510) une valeur d'ajustement en réponse à une probabilité que : 1) l'affectation de liaison DL a été correctement décodée par l'équipement UE (30) ; ou 2) l'affectation de liaison DL n'a pas été correctement décodée par l'équipement UE (30) et un faux accusé ACK ou un faux accusé NACK a été reçu par le noeud (28) alors qu'il est soumis à la valeur de rapport SINR estimée ; et
diminuer (512) le nombre d'éléments CCE qui sont utilisés en vue de communiquer un message de canal PDCCH à l'équipement UE (30) en réponse à la valeur d'ajustement et au rapport CSR ; et
dans lequel, pour répondre à l'absence de réception correspondante de l'accusé ACK ou de l'accusé NACK en provenance de l'équipement UE (30) en augmentant (514) le nombre d'éléments CCE qui sont utilisés en vue de communiquer un message de canal PDCCH à l'équipement UE (30), le processeur de canal PDCCH (38) est en outre configuré de manière à :
déterminer (520) une valeur d'ajustement en réponse à une probabilité que : 1) l'affectation de liaison DL n'a pas été correctement décodée par l'équipement UE (30) ; ou 2) l'affectation de liaison DL a été correctement décodée par l'équipement UE (30) et le noeud (28) n'est pas parvenu à détecter un accusé ACK ou un accusé NACK en provenance de l'équipement UE (30) alors qu'il est soumis à la valeur de rapport SINR estimée ; et
augmenter (522) le nombre d'éléments CCE qui sont utilisés en vue de communiquer un message de canal PDCCH à l'équipement UE (30) en réponse à la valeur d'ajustement et au rapport CSR.

15. Noeud (28) selon la revendication 11, dans lequel le processeur de canal PDCCH (38) est en outre configuré de manière à :
transmettre (800) un message de canal PDCCH contenant un octroi de liaison montante, UL, par l'intermédiaire de l'émetteur-récepteur (34), à l'équipement UE (30) ;
répondre à la réception correspondante d'une transmission en liaison UL, par l'intermédiaire de l'émetteur-récepteur (34), en provenance de l'équipement UE (30), en diminuant (804) le nombre d'éléments CCE qui sont utilisés en vue de communiquer un message de canal PDCCH à l'équipement UE (30) ; et
répondre à l'absence de réception correspondante d'une transmission en liaison UL en augmentant (814) le nombre d'éléments CCE qui sont utilisés en vue de communiquer un message de canal PDCCH à l'équipement UE (30).
